(19) Europäisches Patentamt
European Patent Office
Office européen des brevets

(11) EP 4 786 951 A1

(12) **EUROPEAN PATENT APPLICATION**
published in accordance with Art. 153(4) EPC

(43) Date of publication:
**05.08.2026 Bulletin 2026/32**

(21) Application number: **24871355.4**

(22) Date of filing: **14.05.2024**

(51) International Patent Classification (IPC):
***G01N 15/00*** (2024.01) ***G01N 15/0227*** (2024.01)

(52) Cooperative Patent Classification (CPC):
**G01N 15/00; G01N 15/0227**

(86) International application number:
**PCT/JP2024/017863**

(87) International publication number:
**WO 2025/069544 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023 JP 2023169894**

(71) Applicant: **Hitachi High-Tech Analysis Corporation**
**Tokyo 105-6411 (JP)**

(72) Inventors:
- **ANZAI Yumiko**
  **Tokyo 100-8280 (JP)**
- **MINEMURA Hiroyuki**
  **Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

# (54) PARTICLE MEASUREMENT DEVICE, PARTICLE MEASUREMENT METHOD, AND REFLECTANCE REFERENCE SAMPLE

(57) An object of the invention is to provide a technique capable of easily individually identifying a reference sample used for calibrating a result of measuring a size of a particle in a sample using light. A reference sample according to the invention includes a transparent flat plate having a window, the transparent flat plate includes a boundary surface having a reflectance substantially equal to a reflectance of a sample, and a shape pattern representing ID information for identifying the reference sample is formed on any surface of the transparent flat plate

FIG. 12

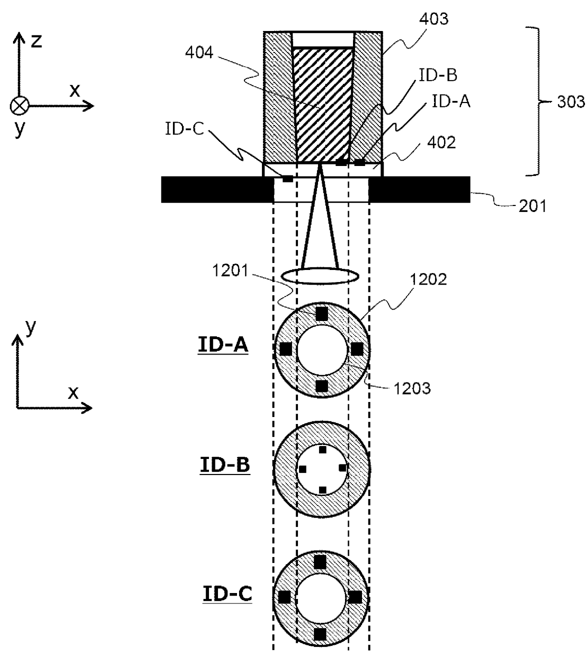


EP 4 786 951 A1

## Description

### Technical Field

The present invention relates to a technique for measuring a size of particles contained in a liquid sample.

### Background Art

In recent years, the focus of drug development has been shifting from small molecule drugs to biopharmaceuticals. Since biopharmaceuticals are polymers, they tend to aggregate, and aggregation can cause toxicity. For example, the food and drug administration or the like is trying to tighten regulations for controlling a concentration of aggregates. Therefore, there is a need for a technique to quantitatively measure size distribution of a desired density for aggregates in a submicron region of 0.1 um to 1 um. Protein aggregates float in a solvent, and positions thereof change over time due to Brownian motion. In the invention, a technique for measuring a size and density of standard particles such as a protein aggregate and a polystyrene bead will be described below. These objects are collectively referred to as a "particle".

PTL 1 describes a technique for detecting a particle using an optical measurement. PTL 1 describes "An optical measurement method for converging light to generate a light spot and measuring an object having a size equal to or smaller than about three times a size of the light spot, the method including: a signal acquisition step of detecting reflected light reflected from the object by irradiating the object while moving a focal position of the light in an optical axis direction at least; a step of acquiring correspondence relationship data in which a correspondence relationship between an intensity of the reflected light and a size of the object is described; and a size calculation step of acquiring the size of the object by referring to the correspondence relationship data using the intensity of the reflected light." (claim 1). The technique described in PTL 1 can implement a high-resolution measurement without the need for preprocessing by signal enhancement through interference of reflected light and reference light.

PTL 2 discloses a technique in which, by physically scanning an objective lens and receiving interference between signal light and interference light using four detectors with different phase conditions, it is unnecessary to adjust a phase of reference light by mirror scanning in time domain optical coherence tomography (OCT). Further, PTL 2 discloses a technique for speeding up scanning of a light spot based on the technique in PTL 1 so as not to be affected by a movement of a particle undergoing Brownian motion in a liquid.

### Citation List

### Patent Literature

| | |
|---|---|
| PTL 1: | JP2017-102032A |
| PTL 2: | WO2020/144754 |

### Summary of Invention

### Technical Problem

In related art such as those described in PTLs 1 and 2, interference between signal light and reference light is used to measure the size of a protein aggregate. The interference efficiency varies depending on a laser temperature, a temporal change, and dust accumulated on an objective lens. In order to always implement an accurate measurement in a user environment, in PTL 2, a reference sample is used to calibrate sensitivity of the interference efficiency. In order to broaden a measurement object in addition to a protein aggregate, various reference samples are prepared according to optical characteristics of the measurement object. Therefore, it is necessary to prevent the reference sample from being mixed up. In the related art, such mix-up of the reference sample is not sufficiently considered.

The invention has been made in view of the above problems, and an object of the invention is to provide a technique capable of easily individually identifying a reference sample used for calibrating a result of measuring a size of a particle in a sample using light.

### Solution to Problem

A reference sample according to the invention includes a transparent flat plate including a window, the transparent flat plate has a boundary surface having a reflectance substantially equal to a reflectance of a sample, and a shape pattern representing ID information for identifying the reference sample is formed on any surface of the transparent flat plate.

Advantageous Effects of Invention

According to the reference sample of the invention, a reference sample used for calibrating a result of measuring a size of a particle in a sample using light can be easily individually identified. Problems, configurations, and effects other than those described above will become apparent by description of the following embodiments.

Brief Description of Drawings

[FIG. 1] FIG. 1 is a schematic diagram illustrating a relationship between a particle size and a reflected light amount in PTL 1 and PTL 2.
[FIG. 2] FIG. 2 is a configuration diagram of a particle measurement apparatus according to Embodiment 1.
[FIG. 3A] FIG. 3A is a diagram illustrating a frame on which a reflectance reference sample is disposed and a metal plate.
[FIG. 3B] FIG. 3B is a diagram illustrating the frame on which the reflectance reference sample is disposed and the metal plate.
[FIG. 4] FIG. 4 is a side cross-sectional view illustrating a reflectance reference sample 303 and a focal position.
[FIG. 5A] FIG. 5A is a schematic diagram illustrating a method for quantifying sensitivity correction.
[FIG. 5B] FIG. 5B is a schematic diagram illustrating the method for quantifying sensitivity correction.
[FIG. 6] FIG. 6 is a diagram illustrating an example of a measurement flow for $A_0$.
[FIG. 7] FIG. 7 is a diagram illustrating an example of a measurement flow for $A_1$.
[FIG. 8] FIG. 8 is a diagram illustrating another example of the measurement flow for $A_1$.
[FIG. 9] FIG. 9 is a diagram illustrating an example of a measurement flow in which an actual sample is subsequently measured after $A_1$ is measured.
[FIG. 10] FIG. 10 is a diagram illustrating disposition of a reflectance reference sample 303.
[FIG. 11A] FIG. 11A is a calculation result illustrating a specification of a thickness variation of a transparent flat plate 402 for implementing a highly accurate size measurement by executing sensitivity calibration.
[FIG. 11B] FIG. 11B illustrates a result of calculating a relationship between a refractive index of the transparent flat plate 402 and a Strehl intensity, as in FIG. 11A.
[FIG. 12] FIG. 12 is a schematic diagram illustrating ID information of the reflectance reference sample 303.
[FIG. 13] FIG. 13 illustrates a data configuration example of ID information 1201.
[FIG. 14A] FIG. 14A is an example of an ID information pattern.
[FIG. 14B] FIG. 14B is an enlarged view of the ID information pattern in FIG. 14A.
[FIG. 15A] FIG. 15A is another example of the ID information pattern.
[FIG. 15B] FIG. 15B is an enlarged view of the ID information pattern in FIG. 15A.
[FIG. 16A] FIG. 16A is another example of the ID information pattern.
[FIG. 16B] FIG. 16B is another example of the ID information pattern.
[FIG. 17A] FIG. 17A is an example of a schematic diagram illustrating a shape of the reflectance reference sample 303 in an xy plane.
[FIG. 17B] FIG. 17B is another example of the schematic diagram illustrating the shape of the reflectance reference sample 303 in the xy plane.
[FIG. 17C] FIG. 17C is another example of the schematic diagram illustrating the shape of the reflectance reference sample 303 in the xy plane.
[FIG. 18] FIG. 18 illustrates a structure and a reflectance of a high-reflectance portion of an ID information mark in ID-A.
[FIG. 19A] FIGS. 19A to 19C illustrate specific structures and reflectances of a high-reflectance portion and a low-reflectance portion of an ID information mark in ID-B.
[FIG. 19B] FIGS. 19A to 19C illustrate specific structures and reflectances of a high-reflectance portion and a low-reflectance portion of an ID information mark in ID-B.
[FIG. 19C] FIGS. 19A to 19C illustrate specific structures and reflectances of a high-reflectance portion and a low-reflectance portion of an ID information mark in ID-B.
[FIG. 20A] FIGS. 20A to 20C illustrate specific structures and reflectances of a high-reflectance portion and a low-reflectance portion of an ID information mark in ID-C.
[FIG. 20B] FIGS. 20A to 20C illustrate specific structures and reflectances of a high-reflectance portion and a low-reflectance portion of an ID information mark in ID-C.

[FIG. 20C] FIGS. 20A to 20C illustrate specific structures and reflectances of a high-reflectance portion and a low-reflectance portion of an ID information mark in ID-C.

[FIG. 21] FIG. 21 is a diagram illustrating an example of a measurement flow for $A_0$ associated with the ID information when the ID information is ID-A or ID-B in FIG. 12, or a pattern in which ID-A and ID-B are mixed.

[FIG. 22] FIG. 22 is a diagram illustrating an example of a measurement flow for $A_0$ associated with the ID information when the ID information is ID-C in FIG. 12.

[FIG. 23] FIG. 23 is a diagram illustrating an example of a flow in which, when the ID information is ID-A or ID-B in FIG. 12, or a pattern in which ID-A and ID-B are mixed, $A_1$ is measured after reproducing the ID information.

[FIG. 24] FIG. 24 is a diagram illustrating an example of a flow in which, when the ID information is ID-C in FIG. 12, $A_1$ is measured after reproducing the ID information.

[FIG. 25] FIG. 25 is a diagram illustrating an example of a measurement flow in which, when the ID information is ID-A or ID-B in FIG. 12, or a pattern in which ID-A and ID-B are mixed, $A_1$ is measured after reproducing the ID information, and subsequently, an actual sample is measured.

[FIG. 26] FIG. 26 is a diagram illustrating an example of a measurement flow in which, when the ID information is ID-C in FIG. 12, $A_1$ is measured after reproducing the ID information, and subsequently, an actual sample is measured.

[FIG. 27A] FIG. 27A is a schematic diagram illustrating a relationship between a container containing an actual sample containing particles to be measured and a solvent and a focal position of a laser beam when measuring a solvent refractive index of the actual sample.

[FIG. 27B] FIG. 27B illustrates, following FIG. 27A, a state in which the focal position is moved to a predetermined position in the sample and the size of the particles in the sample is measured.

[FIG. 28A] FIG. 28A illustrates a reflectance of the reflectance reference sample 303 in Embodiment 2.

[FIG. 28B] FIG. 28B illustrates a reflectance in another configuration example of the reflectance reference sample 303 of Embodiment 2.

[FIG. 29] FIG. 29 illustrates another configuration example of the reflectance reference sample 303.

Description of Embodiments

<Problems in Related Art>

FIG. 1 is a schematic diagram illustrating a relationship between a particle size and a reflected light amount in PTL 1 and PTL 2. The techniques in PTL 1 and PTL 2 utilize interference between reflection signal light from a particle dispersed in a solvent and reference light in order to measure a size of the particle. The detected reflected light changes depending on a size of a particle and a refractive index thereof. In techniques described in PTL 1 and PTL 2, a detection signal can be obtained by converting an electric field amplitude of reflected light into a voltage using interference of light. At this time, based on the Fresnel's law using a refractive index $n_p$ of the particle and a refractive index $n_m$ of the solvent, a magnitude $E_{sig}$ of the detection signal can be expressed by the following formula when a coherence length of a light source is sufficiently long. S is an electric field amplitude of light with which a sample is irradiated, R is an electric field amplitude of reference light, $\sigma$ is a coefficient according to a particle size shown above, and $\eta$ is a constant indicating interference efficiency of reflected light and reference light and efficiency of high electric power conversion of a photodetector.
[Math. 1]

$$E_{sig} = \eta\sigma|S||R|\frac{|n_p - n_m|}{|n_p + n_m|} \qquad \text{(Formula 1)}$$

The particle size can be measured by measuring the detection signal represented by the formula 1. In an actual measurement, a wavelength shift of a semiconductor laser or a variation in laser power occurs due to an environmental temperature change, a temporal change, dust adhering to an objective lens, or the like, and thus a detection signal may vary. In order to prevent this, sensitivity calibration is performed by the following procedure.

(1) A standard sample is prepared by diluting polystyrene standard beads having a known particle size with pure water to an appropriate concentration. (2) The standard sample is measured immediately before a measurement of a sample to be actually measured. (3) Based on the measurement result of the standard sample, a sensitivity correction coefficient is calculated so as to eliminate discrepancy between a measured size and a true size, and the value is manually input.

The calibration procedure requires complicated time and effort for preparation, accurate dilution, a measurement of standard beads and the like, and has a problem from the viewpoint of user convenience. There is a variation in size depending on the lot of the standard beads and the beads may be lost during bead dilution stirring, and thus an accurate measurement may not be performed. Further, standard beads made of polystyrene have a large refractive index difference with a pure water solvent, and therefore have a large reflectance, and a measurement laser power must be set relatively low. In contrast, when measuring protein particles, for example, a refractive index difference between the protein particle and the solvent is small, and therefore the reflectance is small, and the measurement laser power must be set relatively high. A difference in laser power between the two may cause a difference in laser temperature, and laser wavelengths may be different between the two. There is a possibility that the sensitivity coefficient is different between the two due to the wavelength deviation, which is a problem in accurate sensitivity correction.

<Basic Principle of Invention>

(Sensitivity Quantification)

In order to solve the above problems, the invention performs sensitivity calibration using a reflectance reference sample having a plane having a reflection signal equivalent to signal light obtained from a particle to be measured. Specifically, the particle is measured by the following formula obtained by introducing a sensitivity coefficient K into the formula 1.
[Math. 2]

$$E_{sig} = K \times \eta\sigma|S||R|\frac{|n_p - n_m|}{|n_p + n_m|} \qquad \text{(Formula 2)}$$

The sensitivity coefficient K is defined by the following formula. $A_0$ is a reflectance of a reflectance reference sample measured at the time of shipment of a particle measurement apparatus of the invention. A1 is a reflectance when the reflectance reference sample is measured immediately before a measurement of a sample to be actually measured.
[Math. 3]

$$K = \frac{A_1}{A_0} \qquad \text{(Formula 3)}$$

When the reflectance reference sample is measured for each particle measurement or for each predetermined condition, the sensitivity can be corrected by a simpler method using the sensitivity coefficient K.

(Reference Sample)

A reflectance reference sample includes a glass window having a material and a thickness same as those of a glass window on a light entrance surface of a sample container for measuring a particle, and has a structure in which a substance having a reflectance approximately equal to a reflectance of a measurement sample at a boundary surface is formed in contact with the glass window. Accordingly, measurement conditions of the reflectance reference sample and the measurement sample can be the same. In particular, by making a laser power the same during the sample measurement and during the reference sample measurement, the interference efficiency between reflected light and reference light can be made the same, and thus more accurate sensitivity correction can be performed.

As an example of the reflectance reference sample, a resin having a refractive index of 1.47 $\pm$ 0.03 is formed in contact with the transparent flat plate. Accordingly, a refractive index difference between the transparent flat plate and the resin is about the same as a refractive index difference between a protein particle and a solvent, a reflectance of the reflectance reference sample and a reflectance of the protein particle in the solvent are substantially equal to each other, and thus the resin can be used as a reflectance reference sample for measuring protein particles. Here, the expression "substantially equal" means that an error of the measurement result falls within an acceptable range. In other words, a difference between a reflectance of a substance (here, resin) in contact with the transparent flat plate and a reflectance of a sample needs to fall within an acceptable range from the viewpoint of measurement error.

As another example of the reflectance reference sample, a dielectric film was formed in contact with the transparent flat plate as described later. When the particle to be measured is a metal particle, a reflectance of the metal particle in a solvent may vary from 0.01% to several% depending on a material or a composition thereof. By selecting a material and a film thickness of the dielectric film and a material and a film thickness of a metal film to be formed on the dielectric film, the reflectance reference sample can be designed to have a specified reflectance to cope with various particles.

<Embodiment 1>

Hereinafter, in the description of embodiments of the invention, as described in the drawings, a description will be based on a coordinate system in which an optical axis direction is set to a z axis. A size of a particle to be measured is treated as a diameter of a sphere having the same volume.

FIG. 2 is a configuration diagram of a particle measurement apparatus according to Embodiment 1 of the invention. Laser light emitted from a light source 100 whose light emission state is controlled by a laser driver 101 that controls radio frequency superimposition and emission power is converted into parallel light by a collimator lens 102, a polarization direction is adjusted by a λ/2 plate 103 whose optical axis is set to about 22.5 degrees with respect to a horizontal direction, and then the laser light is separated into signal light and reference light by a polarized beam splitter 104.

After the reference light is converted into a circular polarized state by a λ/4 plate 105, the reference light is reflected by a reference light mirror 106, reflected light is brought into a polarized state in which polarized light is rotated by 90 degrees from an outward path by the λ/4 plate 105, and the polarized light is reflected by the polarized beam splitter 104. A traveling direction of the signal light is deflected by a composite deflection element 107 in an XY direction, and then the signal light is converted into a circular polarized state by an action of a built-in λ/4 plate, and is focused in the sample 204 by the objective lens 108.

A drive mechanism 109 that moves the sample in a Z axis direction has a function of scanning a focal position of the signal light along a Z axis direction (an optical axis direction). A component of the signal light reflected from the sample 204 is deflected in a direction same as an outward path by the composite deflection element 107 in the XY direction, the signal light becomes circular due to the action of the built-in λ/4 plate and is brought into a polarized state in which polarized light is rotated by 90 degrees from an outward path, and polarized light is transmitted through the polarized beam splitter 104.

A sample container 200 holds the sample 204 in the well and guides the signal light into the sample through a transparent window 202. The container 203 is a resin member that forms the well of the sample container. A metal plate 201 is in contact with the transparent window 202 to mechanically hold the sample container 200 and is responsible for stabilizing the temperature of the sample.

The signal light and the reference light are multiplexed by the polarized beam splitter 104, guided to a detection optical system 112, and split into transmitted light and reflected light by a half beam splitter 113 via a pinhole 111.

The reflected light is transmitted through a λ/4 plate 114 whose optical axis is set to about 45 degrees with respect to the horizontal direction, then the transmitted light is converged by a condensing lens 115 and is split into two by a polarized beam splitter 116, the split light beams are converted into electric signals by respective photodetectors 150 and 151, and the electric signals are differentially amplified by a current differential amplifier 152 to become a detection signal 123.

The transmitted light is transmitted through a λ/2 plate 118 whose optical axis is set to about 22.5 degrees with respect to the horizontal direction, then the transmitted light is converged by a condensing lens 119 and is split into two by a polarized beam splitter 120, the split light beams are converted into electric signals by respective photodetectors 153 and 154, and the electric signals are differentially amplified by a current differential amplifier 155 to become a detection signal 122.

The detection optical system 112 implements a homodyne phase diversity method, and the detection signals 122 and 123 are processed by a signal processing unit 124. The signal processing unit 124 (processing unit) executes sensitivity correction based on information held in an information holding unit 125, and displays a calculation result including the correction on a display unit 126 to present the calculation result to a user. The information held in the information holding unit 125 and the sensitivity correction based on the information will be described later.

(Measurement of Reflectance of Boundary Surface)

FIGS. 3A and 3B are diagrams illustrating a frame on which a reflectance reference sample is disposed and a metal plate. In the drawing, a reflectance reference sample 303 is inserted into a frame 302 and disposed so as to be in contact with a surface of the metal plate 201. At this time, the reflectance reference sample 303 may be disposed in the frame 302 together with another sample container 304. When the reflectance reference sample 303 is disposed in the frame 302 together with the other sample container 304, both can be collectively measured in a series of flows.

FIG. 4 is a side cross-sectional view illustrating the reflectance reference sample 303 and a focal position. The reflectance reference sample 303 includes a transparent flat plate 402, a container 403, and a substance 404 in contact with the transparent flat plate 402, and is disposed in contact with the metal plate 201. Light 400 condensed by the objective lens 108 passes through a window 405 for measurement and is applied to a boundary surface between the transparent flat plate 402 and the substance 404. By adjusting a relative position between the boundary surface and the objective lens 108, a focal position of the objective lens 108 and the boundary surface are matched, and a reflectance from the boundary surface is acquired. Further, a position of the reference light mirror 106 is adjusted to adjust an optical path length such that the reflectance from the boundary surface is maximized.

(Sensitivity Quantification)

FIGS. 5A and 5B are schematic diagrams illustrating a method for quantifying sensitivity correction. First, a reflectance ($A_0$) from the boundary surface between the transparent flat plate 402 of the reflectance reference sample 303 attached to the apparatus and the substance 404 in contact with the transparent flat plate 402 is measured using the method described above when the apparatus is shipped, and information thereof is stored in the information holding unit 125. Next, when measuring an actual sample, a reflectance ($A_1$) from the boundary surface between the transparent flat plate 402 of the reflectance reference sample 303 and the substance 404 in contact with the transparent flat plate 402 is measured in a similar manner, and information thereof is stored in the information holding unit 125. The sensitivity coefficient K can be obtained from the values of $A_0$ and $A_1$, and the detection signal can be corrected by the formula 2.

FIG. 5 shows a case of $A_0 > A_1$. As factors that cause this, it is considered that a wavelength shift of a semiconductor laser or a variation in laser power due to an environmental temperature change or a temporal change, dust adhering to an optical element including an objective lens, a temporal change of the optical element itself, or the like changes optical characteristics, and an output signal decreases. By using the above-described sensitivity correction quantification method, the influence of these factors on the measurement result can be significantly reduced.

(Measurement Flow)

FIG. 6 is a diagram illustrating an example of a measurement flow for $A_0$. The present flowchart can be executed by the signal processing unit 124. The same applies to the following flowcharts. A condensing position of the signal light is moved to a planar position of the reflectance reference sample 303, and the light source 100 is caused to emit light at standard power $P_0$. A Z-axis direction position Z0 of the boundary surface and a position R of the reference light mirror 106 are initialized, separately. Z0 is determined by measuring a signal while scanning Z0 around the transparent window 405. A mirror position R0 at which optical path lengths of the signal light and the reference light coincide with each other is determined by measuring a signal while scanning R at the determined Z0. A signal level obtained at this time is stored as $A_0$ in the information holding unit 125.

Since $A_0$ and $A_1$ are measured using the same light emission power, the standard power is used here. The use of the standard power is intended to prevent the signal level of the measurement result from being saturated. Under the condition that the non-saturated signal level can be obtained, the reflectance of the sample and the reflectance of the reflectance reference sample 303 need to be substantially the same (a difference therebetween is within an acceptable range from the viewpoint of measurement accuracy).

FIG. 7 is a diagram illustrating an example of a measurement flow for $A_1$. $A_1$ can be measured in the same manner as in FIG. 6. The signal processing unit 124 calculates the sensitivity coefficient K based on $A_0$ and $A_1$ obtained in FIGS. 6 and 7.

FIG. 8 is a diagram illustrating another example of the measurement flow for $A_1$. In addition to the flow in FIG. 7, a predetermined value is set as the sensitivity coefficient K, and sensitivity abnormality processing can be executed when the sensitivity coefficient K obtained based on $A_0$ and $A_1$ is out of the range of the predetermined value. For example, the signal processing unit 124 can notify the user of the fact by outputting a signal or a message indicating that the sensitivity coefficient K is out of the predetermined range.

FIG. 9 is a diagram illustrating an example of a measurement flow in which an actual sample is subsequently measured after $A_1$ is measured. When measuring the actual sample, Z0 and R0 can be determined in the same manner as for the reflectance reference sample. A focal position is moved from Z0 to a predetermined measurement position Z, and the detection signal is processed while scanning a focal point according to a predetermined scanning condition. A measurement result of the actual sample is calibrated based on the sensitivity coefficient K. By the above processing, a particle size and density distribution of the actual sample are calculated, and the result is displayed on the display unit 126.

(Disposition of Reflectance Reference Sample)

FIG. 10 is a diagram illustrating disposition of the reflectance reference sample 303. FIG. 3 illustrates an example in which the reflectance reference sample 303 is disposed in the frame 302 together with another sample container 304, but the reflectance reference sample 303 may be disposed at another position. For example, the reflectance reference sample 303 having the structure illustrated in FIG. 4 can be disposed on a part of a sample stage 1001 that holds the metal plate 201 and is larger than the metal plate 201. At this time, the reflectance reference sample 303 can be disposed outside the frame 302 to be in contact with a metal plate 1002 separate from the metal plate 201. The other metal plate 1002 may be separate from the metal plate 201 or may be integrated with the metal plate 201.

When the reflectance reference sample 303 is disposed outside the frame 302, samples to be measured can be disposed at all positions in the frame 302, and thus the number of samples that can be measured can be maximized. With this disposition, the reflectance reference sample 303 disposed outside the frame 302 can be prevented from being removed by the user. Therefore, human errors such as forgetting to dispose the reflectance reference sample 303 and making a mistake in the disposition position can be avoided. For example, it is conceivable to place the reflectance reference sample 303 at a position that the user cannot see. The reflectance reference sample 303 may be detachable or may be fixedly attached.

(Thickness of Transparent Flat Plate)

FIG. 11A is a calculation result illustrating a specification of a thickness variation of the transparent flat plate 402 for implementing a highly accurate size measurement by executing sensitivity calibration. In order to measure the particle size distribution with high accuracy, it is necessary to satisfy a predetermined specification in the configuration of the reflectance reference sample 303 as in the configuration specification of the sample container. As is well known, when a thickness of the transparent flat plate 402 deviates from a predetermined value, a spherical aberration occurs optically. The influence on the detection signal can be treated as a decrease in Strehl intensity based on a wavefront aberration. A decrease in detection signal (Strehl intensity) due to the deviation in thickness of the transparent flat plate 402 is calculated. Here, the result is shown when a semiconductor laser having a wavelength of 785 nm is used as the light source 100, a microscope lens having a numerical aperture of 0.45 is used as the objective lens 108, and borosilicate glass (measured refractive index value = 1.520) having a thickness of 175 $\mu$m is used as the transparent flat plate 402. As can be seen from the drawing, in order to reduce the amount of decrease in detection signal to 0.2% or less, the variation in thickness of the transparent flat plate 402 is required to be 70 $\mu$m or less.

FIG. 11B illustrates a result of calculating a relationship between the refractive index of the transparent flat plate 402 and the Strehl strength, as in FIG. 11A. As illustrated in the drawing, the acceptable range of the refractive index of the transparent flat plate 402 is $\pm$0.22.

As an example of the invention, the reflectance reference sample 303 illustrated in FIG. 4 and FIGS. 12 and 29 to be described later cannot acquire accurate sensitivity unless optically compatible with the sample container 304 illustrated in FIG. 3. Specifically, the transparent flat plate 402 formed at the bottom must have a thickness of 175 $\mu$m $\pm$ 70 $\mu$m and a refractive index of 1.520 $\pm$ 0.22. As a composition of the transparent flat plate 402 that can satisfy this requirement, a borosilicate glass substrate of optical quality can be used.

(ID Information)

FIG. 12 is a schematic diagram illustrating ID information of the reflectance reference sample 303. The reflectance reference sample 303 may have ID information 1201. Specifically, as illustrated as ID-A, information corresponding to the reflectance of the reflectance reference sample 303 can be formed in an optically identifiable form at a location inside an outer diameter 1202 of the transparent window 405 and outside a container opening 1203 within a surface of the transparent flat plate 402 on a side opposite to a side in contact with the metal plate 201.

Instead of or in combination with ID-A, a configuration such as ID-B or ID-C is also possible. ID-B can be formed in an optically identifiable form at a location inside the container opening 1203 within the surface of the transparent flat plate 402 on the side opposite to the side in contact with the metal plate 201. ID-C can be formed in an optically identifiable form at a location inside the outer diameter 1202 of the transparent window 405 and outside the container opening 1203 within a surface of the transparent flat plate 402 on the side in contact with the metal plate 201. As an optically identifiable form, an information mark having a reflectance higher than a reflectance (background reflectance) of a portion having no information can be recorded (information mark white), or an information mark having a reflectance lower than the background reflectance can be recorded (information mark black).

In FIG. 12, the ID information 1201 is disposed at four symmetrical positions in each of ID-A, ID-B, and ID-C, but the disposition is not necessarily limited thereto. For example, the number of disposition positions may be 1 to 3 or more than 4. The disposition does not need to be symmetrical, and the disposition is not particularly limited. Further, recording can also be performed using a pattern in which two or more of the three patterns, ID-A, ID-B, and ID-C, are mixed.

In ID-A and ID-B, the ID information 1201 is formed inside the reflectance reference sample 303, and thus there is little risk of the ID information mark being rubbed off during sample handling. ID-A has an advantage that an ID information region can be widened, and ID-B has an advantage that an actual measurement position and an ID information position are close to each other as compared with the case of ID-A and ID-C, and thus a movement distance of the sample stage can be shortened, and a measurement time can be shortened. ID-C has the same advantage as ID-A in that the ID information region can be widened, but also has the advantage that information can be formed after the reflectance reference sample 303 is assembled, making the sample production process easier. However, there is a risk of the ID information mark being rubbed off during sample handling.

In the ID information 1201, information corresponding to the reflectance of the reflectance reference sample is recorded. Specifically, the ID information may be a reflectance value itself, or may be a value obtained by dividing the reflectance value into levels based on a certain criteria, for example, a high reflectance, a medium reflectance, or a low reflectance. The ID information may be a refractive index value itself, or may be a value obtained by dividing the refractive index value into levels based on a certain criteria, for example, a high refractive index, a medium refractive index, or a low refractive index. The ID information may be an optimum laser light power value for a reflectance measurement, or may be a value obtained by dividing the optimum laser light power value based on a certain criteria, such as a high power, a medium power, or a low power. As an example of each of the above criteria, three levels of high, medium, and low are set, but the number of levels can be freely selected. The criteria thereof can be freely determined. The ID information may be information on a material used for the reflectance reference sample 303, such as resin, dielectric, metal, pure water, or oil. Information classified into levels based on a certain criterion and information on materials are defined as type information of the sample. Based on the type information, it can be determined that the sample having the information is of a type different from other samples.

The ID information may be a serial number. When the serial number is associated with the reflectance or the like, the same information as described above can be recorded. When the serial number is recorded, there is an advantage that traceability of each reflectance reference sample 303 is facilitated and quality is easily ensured.

The ID information can be recorded by a known method such as printing or engraving. Examples thereof include photolithography, inkjet printing, and laser markers.

As the ID information pattern, a one-dimensional bar code, a two-dimensional bar code, a combination of a specific dot size and density, or the like can be used. The pattern that can be used is not limited thereto, and other known patterns can be used as long as they are optically identifiable.

FIG. 13 is a data configuration example of the ID information 1201. Here, 8 bytes of error correction code is combined with 8 bytes of ID information. The ID information includes 4 bytes of a serial number of the reflectance reference sample 303, 1 byte of type information of the reflectance reference sample 303, 1 byte of the refractive index of the reflectance reference sample 303, 1 byte of laser power to be applied to the reflectance reference sample 303, and 1 byte of other information, but the contents of the ID information are not limited thereto. For example, reflectance information can be recorded. Certain information can also be recorded at a plurality of locations. The error correction code can be easily implemented by applying a standard of an optical disc such as a Blu-ray (registered trademark) disc.

FIG. 14A is an example of the ID information pattern. First, information on an orientation of the ID information is recorded at four corners of a region of 300 $\mu$m $\times$ 300 $\mu$m. Here, pieces of information indicating the upper left, upper right, lower left, and lower right are recorded in four locations, the upper left, upper right, lower left, and lower right, respectively. As the information, a one-dimensional bar code, a two-dimensional bar code, a combination of a specific dot size and density, and other known patterns can be used. The information indicating the orientation of the ID information does not need to be recorded at all of the four locations, and may be recorded at least at one location. When the information is recorded at a plurality of locations, identification of the orientation of the ID information becomes easier, and particularly when different pieces of information are recorded in four locations, information from at least one of the four locations may be read to identify the orientation of the ID information, and the orientation of the ID information pattern can be more easily identified, and thus a start position of the ID information can be identified in a short time.

Any information different from the information of the upper left, upper right, lower left, and lower right can be recorded between the upper left and upper right, the upper right and lower right, the lower right and lower left, and the lower left and upper left. A dummy pattern such as a meaningless repeated pattern may be used, and information indicating the upper side, right side, lower side, and left side may be recorded. For example, information on a position such as address information may be recorded on each side. By using the information represented by each side, for example, when an upper left pattern is specified and a position of the side connected thereto is specified, a position of an ID information body portion can be specified with reference to the position. That is, the information represented by each side can suggest the position of the ID information.

FIG. 14B is an enlarged view of the ID information pattern in FIG. 14A. Each of the pieces of information on the upper left, upper right, lower left and lower right is recorded in a size of, for example, about 50 $\mu$m $\times$ 50 $\mu$m, and inside that, the ID information is recorded in a range of about 200 $\mu$m $\times$ 200 $\mu$m. As illustrated in FIG. 14B, the ID information is recorded as a barcode string having a width of about 25 $\mu$m from the upper left to the upper right. A length of the barcode per unit is about 5 $\mu$m, and information mark white and information mark black are recorded in a predetermined pattern. With 20 barcodes being 1 byte of information, 2 bytes of information is recorded in one row of a barcode string. The width of the barcode string is set to 25 $\mu$m, and thus eight rows of barcode strings can be recorded in an ID information range of about 200 $\mu$m $\times$ 200 $\mu$m, whereby 16 bytes of information as a whole can be recorded. A barcode string having a width of 25 $\mu$m and a length of 5 $\mu$m per unit can be produced by photolithography, but the production method is not limited thereto.

FIG. 15A is another example of the ID information pattern. In this example, a range of the ID information pattern is 1960 $\mu$m $\times$ 600 $\mu$m, and similar to FIG. 14A, the information on the position is recorded at four corners, and a barcode of the ID information is recorded in a range of 1860 $\mu$m $\times$ 500 $\mu$m.

FIG. 15B is an enlarged view of the ID information pattern in FIG. 15A. As illustrated in FIG. 15B, a width of the barcode is about 100 μm, and a length of the information mark per unit is about 22 μm. Therefore, four rows of barcodes, each row being 4 bytes can be recorded, and a total of 16 bytes of information can be recorded. The barcode string can be produced by inkjet printing at 2400 dpi, but the production method is not limited thereto, and the barcode string can also be produced by, for example, a laser marker. Recording can be more easily performed by the inkjet printing, and when a laser marker is used, recording is semi-permanent without being lost by rubbing.

FIGS. 16A and 16B are another example of the ID information pattern. In this example, the ID information is recorded using a combination of a predetermined dot size and a predetermined dot density. When three types of dot sizes and three types of dot densities are specified, $3 \times 3 = 9$ different pieces of information can be recorded by combining these (FIG. 16B). The method has a disadvantage that an information amount as the ID information is small, but the method has an advantage that since the same pattern is recorded repeatedly, when the pattern is recorded over a range wider than a scanning range of the laser beam, the ID information can be easily read even when the scanning range is shifted. Similarly, the barcode patterns described with reference to FIGS. 14 and 15 may also have the same information repeatedly disposed thereon.

In the case of the ID information pattern illustrated in FIG. 14A, the scanning range of the laser beam of the particle measurement apparatus according to the present embodiment is about 300 μm × 300 μm, and thus all pieces of the ID information can be read by one scanning, and the reading can be performed in about 0.1 seconds. On the other hand, in the case of the ID information pattern illustrated in FIG. 15A, scanning a plurality of times is required to read all pieces of the ID information. Specifically, by scanning seven times in a horizontal direction and two times in a vertical direction, all pieces of the ID information can be read, and a time required therefor is about 15 seconds.

A size of the entire ID information pattern and contents of the ID information can be appropriately changed by setting the scanning range of the laser beam and the time required for reading the ID information. For example, when it is desired to set the laser beam scanning range to be smaller or the reading time to be shorter, the size of the entire ID information pattern can be made smaller or the amount of ID information can be reduced. When it is not necessary to enlarge the laser light scanning range or to set the reading time very short, the size of the entire ID information pattern can be made larger, or the information amount of the ID information can be increased.

The dots are disposed such that no dots overlap when any three of the nine patterns are combined. Accordingly, any three of the nine patterns can be combined. When the ID information is read, the information content can be specified as long as it is known which patterns have been combined, and thus the orientation of the patterns is not an issue.

FIG. 17A is an example of a schematic diagram illustrating a shape of the reflectance reference sample 303 in an xy plane. The reflectance reference sample 303 includes four transparent windows and has a shape that can be installed as it is in the frame 302 in FIG. 3A. Accordingly, a positional deviation in the xy plane can be limited to a value corresponding to design dimensions and processing accuracy of the frame 302 and the reflectance reference sample 303. Accordingly, in the reading of the ID information disposed at the position illustrated in FIG. 12, since a rough position can be known in advance, an access time of an optical head for reading the ID information can be shortened. At this time, as illustrated in the drawing, when a cutout is provided in a part of the reflectance reference sample 303, the sample can be prevented from being mounted in an incorrect orientation on the frame 302. The reflectance reference sample 303 illustrated in the drawing does not necessarily have to be placed directly on the frame 302, and may be placed outside the frame 302.

FIGS. 17B and 17C are another example of the schematic diagram illustrating the shape of the reflectance reference sample 303 in the xy plane. In FIG. 17B, one transparent window is provided, and in FIG. 17C, two transparent windows are provided. The reflectance reference sample 303 can be installed outside the frame 302. By installing the reflectance reference sample 303 outside the frame 302, measurement samples can be placed at all locations within the frame 302, and thus the number of measurement samples can be maximized. The reflectance reference sample 303 illustrated in FIGS. 17B and 17C may be installed in the frame 302. Each of the short sides, the long sides, the corners, the cutouts, or the like can be installed in accordance with the frame 302.

FIG. 18 illustrates a structure and a reflectance of a high-reflectance portion of the ID information mark in ID-A. Specifically, a material of the high-reflectance portion (portion where information is recorded) is Al, and calculation results of an Al film thickness and a reflectance are shown. When a black plastic container is used as the container 403, a reflectance (background reflectance) of the portion having no ID information in ID-A is 1% or less. Therefore, when the Al film thickness is set to 2 nm or more, a reflectance of about 10 times the background reflectance is obtained, and the ID information mark can be reliably read. In order to clearly recognize the ID information, the reflectance of the ID information mark may be at least twice a background reflectance (that is, a reflectance of a side wall of the container 403). The same applies to ID-B and ID-C.

FIGS. 19A to 19C illustrate specific structures and reflectances of a high-reflectance portion and a low-reflectance portion of the ID information mark in ID-B. When a resin material is used as a filling material, a background reflectance in ID-B is about 5%. Therefore, in order to set the reflectance of the ID information mark to be higher than the background reflectance, it is desirable to set the reflectance of the high-reflectance portion to 50% or more, which is 10 times or more the background reflectance. Accordingly, the ID information mark can be reliably read. FIG. 19A illustrates a calculation result of the reflectance with respect to the Al film thickness when Al is used as the high-reflectance portion. Accordingly, when the Al film thickness is set to 7 nm or more, a reflectance of about 10 times the background reflectance can be obtained, and the ID information mark can be reliably read.

On the other hand, when the reflectance of the ID information mark is set lower than the background reflectance in ID-B, the reflectance of the ID information mark may be set to 0.5% or less since the background reflectance of ID-B is about 5%. FIG. 19B is a calculation result of the reflectance with respect to a W film thickness when the low-reflectance portion has a four-layer structure of ZnS (1)/W/ZnS(2)/Al. Here, the ZnS(1) film thickness was 20 nm, the ZnS(2) film thickness was 60 nm, and the Al film thickness was 50 nm. Accordingly, when the W film thickness is 8.2 nm to 11.3 nm, a reflectance of 1/10 or less of the background reflectance can be obtained, and the ID information mark can be reliably read.

FIG. 19C illustrates another example in which the reflectance of the ID information mark is set lower than the background reflectance in ID-B. Here, a multi-layer structure formed of ZnS and $SiO_2$ dielectric layers is used for the low-reflectance portion. ZnS was provided on the surface in contact with the glass bottom plate, and $SiO_2$ and ZnS were alternately provided thereon. A layer farthest from the glass bottom plate was ZnS. In a certain multilayer structure, all $SiO_2$ layers had the same film thickness, all ZnS layers except for a layer closest to the glass bottom plate and a layer furthest from the glass bottom plate had the same film thickness, and the ZnS layer closest to the glass bottom plate and the ZnS layer furthest from the glass bottom plate had half the film thickness of the other ZnS layers. The film thicknesses of $SiO_2$ and ZnS were different. Under these conditions, the reflectance for a certain number of layers is calculated by independently changing the film thicknesses of $SiO_2$ and ZnS, the smallest reflectance among them was taken as the reflectance for that number of layers, and the reflectance with respect to the number of layers was calculated as illustrated in FIG. 19C. Accordingly, when the number of dielectric layers is five or more, a reflectance of 0.5% or less, which is a reflectance of 1/10 or less of the background reflectance, can be obtained, and the ID information mark can be reliably read.

In FIGS. 19B and 19C, it has been described that the reflectance of the ID information mark is 1/10 or less of the background reflectance (that is, a reflectance of the substance 404), but it is considered that the ID information can be sufficiently identified when the reflectance is at least 1/2 or less. Similarly, when making the ID information mark dark in ID-C, the reflectance of the ID information mark may be set to half or less of the background reflectance (that is, the reflectance of the side wall of the container 403).

FIGS. 20A to 20C illustrate specific structures and reflectances of a high-reflectance portion and a low-reflectance portion of the ID information mark in ID-C. The background reflectance in ID-C is about 4%, which is a reflectance of the air and the glass bottom plate. Therefore, in order to set the reflectance of the ID information mark high, the reflectance of the high-reflectance portion may be set to 40% or more, which is 10 times the background reflectance, and thus the ID information mark can be read reliably. FIG. 20A illustrates a calculation result of the reflectance with respect to the Al film thickness when Al is used as the high-reflectance portion (white). Accordingly, when the Al film thickness is set to 5 nm or more, a reflectance of about 10 times the background reflectance can be obtained, and the ID information mark can be reliably read.

On the other hand, when the reflectance of the ID information mark is set lower than the background reflectance in ID-C, the reflectance of the ID information mark may be set to 0.4% or less since the background reflectance in ID-C is about 4%. FIG. 20B is a calculation result of the reflectance with respect to a ZnS film thickness when the low-reflectance portion has a four-layer structure of $SiO_2$/W/ZnS/Al. Here, the film thickness of $SiO_2$ was 95 nm, the film thickness of W was 10 nm, and the Al film thickness was 50 nm. From these, when the ZnS film thickness is 50 nm to 60 nm, a reflectance of 1/10 or less of the background reflectance can be obtained, and the ID information mark can be reliably read.

FIG. 20C illustrates another example in which the reflectance of the ID information mark is set lower than the background reflectance in ID-C. Here, a multi-layer structure formed of ZnS and $SiO_2$ dielectric layers is used for the low-reflectance portion. ZnS was provided on the surface in contact with a glass bottom plate, and $SiO_2$ and ZnS were alternately provided thereon. A layer farthest from the glass bottom plate was ZnS. In a certain multilayer structure, all $SiO_2$ layers had the same thickness, all ZnS layers except for a layer closest to the glass bottom plate and a layer furthest from the glass bottom plate had the same thickness, and the ZnS layer closest to the glass bottom plate and the ZnS layer furthest from the glass bottom plate had half the thickness of the other ZnS layers. The film thicknesses of $SiO_2$ and ZnS were different. Under these conditions, the reflectance for a certain number of layers is calculated by independently changing the film thicknesses of $SiO_2$ and ZnS, the smallest reflectance among them was taken as the reflectance for that number of layers, and the reflectance with respect to the number of layers was calculated as illustrated in FIG. 20C. Accordingly, when the number of dielectric layers is five or more, a reflectance of 0.4% or less, which is a reflectance of 1/10 or less of the background reflectance, can be obtained, and the ID information mark can be reliably read.

The structure illustrated in FIGS. 18 to 20 can be formed by photolithography and a thin film process.

FIG. 21 is a diagram illustrating an example of a measurement flow for $A_0$ associated with the ID information when the ID information is ID-A or ID-B in FIG. 12, or a pattern in which ID-A and ID-B are mixed. A condensing position of the signal light is moved to a planar position of the reflectance reference sample 303, and the light source 100 is caused to emit light at standard power $P_0$. A Z-axis direction position Z0 of the boundary surface and a position R of the reference light mirror 106 are initialized. Z0 is determined by measuring a signal while scanning the periphery of the transparent window 405 in a Z direction. A mirror position R0 at which the optical path lengths of the signal light and the reference light coincide with each other is determined by measuring a signal while scanning R at the determined Z0. Next, while keeping the Z position at Z0, the condensing position is scanned in XY directions to move to the ID information position, and the ID information 1201 of the reflectance reference sample 303 is read. Based on the acquired ID information, light is emitted at a power P1 for measuring the reflectance reference sample, and the signal level obtained at this point is designated as $A_0$. The signal level $A_0$ is stored in the information holding unit 125 in association with the ID information. When there are a plurality of types of reflectance reference samples, the above flow is repeated, and each signal level $A_0$ for each ID information is stored in the information holding unit 125.

FIG. 22 is a diagram illustrating an example of a measurement flow for $A_0$ associated with the ID information when the ID information is ID-C in FIG. 12. FIG. 22 is the same as FIG. 21 except that the Z position before reading the ID information is moved in a negative Z direction from Z0 by the thickness of the glass bottom plate.

FIG. 23 is a diagram illustrating an example of a flow in which, when the ID information is ID-A or ID-B in FIG. 12, or a pattern in which ID-A and ID-B are mixed, $A_1$ is measured after reproducing the ID information. When the user selects an object to be measured, the ID information of the reflectance reference sample suitable for the object to be measured is first read. From contents of the ID information, it is determined whether the reflectance reference sample for the object to be measured that is selected by the user is normal, and when the reflectance reference sample is normal, the next flow is performed, and when the reflectance reference sample is abnormal, abnormality processing such as issuing an alarm is performed. Since the reflectance of the reflectance reference sample 303 is the same as the reflectance of the object to be measured, by reading information on the reflectance of the reflectance reference sample 303 described by the ID information, which object to be measured corresponds to the information can be automatically known. Accordingly, human errors such as mix-up of the reflectance reference samples can be prevented. After it is determined that the reflectance reference sample is normal, $A_1$ is measured by emitting light with a laser light power for measuring the signal level of the reflectance reference sample based on the contents of the ID information, and the sensitivity coefficient K is calculated based on $A_0$ and $A_1$. A predetermined value is set as the sensitivity coefficient K, and sensitivity abnormality processing can be executed when the sensitivity coefficient K obtained based on $A_0$ and $A_1$ is out of the range of the predetermined value. For example, the signal processing unit 124 can notify the user of the fact by outputting a signal or a message indicating that the sensitivity coefficient K is out of the predetermined range.

FIG. 24 is a diagram illustrating an example of a flow in which, when the ID information is ID-C in FIG. 12, $A_1$ is measured after reproducing the ID information. FIG. 24 is the same as FIG. 23 except that the Z position before reading the ID information is moved in a negative Z direction from Z0 by the thickness of the glass bottom plate.

FIG. 25 is a diagram illustrating an example of a measurement flow in which, when the ID information is ID-A or ID-B in FIG. 12, or a pattern in which ID-A and ID-B are mixed, $A_1$ is measured after reproducing the ID information, and subsequently, an actual sample is measured. When the user selects an object to be measured, the ID information of the reflectance reference sample for the object is first read. From contents of the ID information, it is determined whether the reflectance reference sample for the object to be measured that is selected by the user is normal, and when the reflectance reference sample is normal, the next flow is performed, and when the reflectance reference sample is abnormal, abnormality processing such as issuing an alarm is performed. Accordingly, human errors such as mix-up of the reflectance reference samples can be prevented. After it is determined that the reflectance reference sample is normal, $A_1$ is measured by emitting light with laser light power for measuring the signal level of the reflectance reference sample based on the contents of the ID information, and the sensitivity coefficient K is calculated based on $A_0$ and $A_1$. A predetermined value is set as the sensitivity coefficient K, and sensitivity abnormality processing can be executed when the sensitivity coefficient K obtained based on $A_0$ and $A_1$ is out of the range of the predetermined value. For example, the signal processing unit 124 can notify the user of the fact by outputting a signal or a message indicating that the sensitivity coefficient K is out of the predetermined range. The flow after acquiring the sensitivity coefficient K is the same as that in FIG. 9.

FIG. 26 is a diagram illustrating an example of a measurement flow in which, when the ID information is ID-C in FIG. 12, $A_1$ is measured after reproducing the ID information, and subsequently, an actual sample is measured. FIG. 26 is the same as FIG. 25 except that the Z position before reading the ID information is moved in a negative Z direction from Z0 by the thickness of the glass bottom plate.

In FIGS. 21 to 26, it is important to set the same P1 as the laser light power for the actual measurement, the measurement of $A_0$ associated with the ID information, and the measurement of $A_1$ performed before the actual measurement. Therefore, sensitivity deviation due to a difference in laser light power can be prevented.

(Machine Difference and Others)

By using the reflectance reference sample 303, substantially the same result can be obtained for the same sample even when there is a machine difference (minute difference in laser wavelength, optical system, detector sensitivity, or the like) in the particle measurement apparatus. Further, the invention can also be used for failure diagnosis of an apparatus. Specifically, when the sensitivity coefficient K deviates from a certain numerical range, deterioration due to temporal change of the laser, adhesion of dust or the like to the optical element, deviation of the optical system, or the like is considered, and thus the signal processing unit 124 can issue an alert on the display unit 126, for example, to prompt apparatus maintenance or repair.

(Refractive Index Measurement of Solvent)

FIG. 27A is a schematic diagram illustrating a relationship between a container containing an actual sample containing particles to be measured and a solvent and a focal position of laser light when measuring a solvent refractive index of an actual sample. The reflectance reference sample 303 can also be used for refractive index measurement of a solvent of an actual sample. In the drawing, reference numeral 1401 denotes a sample, and reference numeral 1402 denotes a sealing tape. In order to measure a refractive index of a solvent, the invention utilizes the fact that a reflectance of a boundary between the transparent flat plate 402 and the sample depends on the refractive index of the solvent. A focal point of the objective lens 108 can be positioned at a boundary between the sample 1401 and the transparent flat plate 402 by determining a condition where a detection signal is maximum while moving a sample stage (not illustrated) in the Z direction. At this time, the magnitude of the detection signal can be expressed by the formula 1 from the Fresnel formula.

In the invention, by selecting a composition of the transparent flat plate 402, a refractive index thereof can be used as a specified value. Similarly, an electric field amplitude S of light applied to the sample and an electric field amplitude R of reference light can be handled as constant values by setting an emission power condition of a semiconductor laser (not illustrated) to be constant.

Further, a magnitude of a detection signal when a substance having a refractive index $n_o$ is used as the sample as a substance in contact with the interface of the reflectance reference sample 303 is measured, and a value thereof is defined as $E0_{sig}$. $E0_{sig}$ is represented by a formula 4. A formula 5 is derived from the formulae 1 and 4. In the formula 5, since values other than a refractive index $n_m$ of the solvent are known values or measured values, the refractive index $n_m$ of the solvent can be measured using the formula 5.

[Math. 4]

$$E0_{sig} = \eta |S||R| \frac{|n_g - n_o|}{|n_g + n_o|} \quad \text{(Formula 4)}$$

[Math. 5]

$$\frac{|E_{sig}|}{|E0_{sig}|} = \frac{|n_g - n_m| \times |n_g + n_o|}{|n_g - n_o| \times |n_g + n_m|} \quad \text{(Formula 5)}$$

FIG. 27B illustrates, following FIG. 27A, a state in which the focal position is moved to a predetermined position in the sample and the size of the particles in the sample is measured.

<Embodiment 2>

(Refractive Index: Dielectric Film)

FIG. 28A illustrates a reflectance of the reflectance reference sample 303 in Embodiment 2 of the invention. In Embodiment 2, a dielectric film is used as a substance in contact with the transparent flat plate 402 of the reflectance reference sample 303 in FIG. 4. A dielectric film made of ZnS was formed by sputtering on the transparent flat plate 402 made of borosilicate glass having a refractive index of 1.52. A reflectance of a reflectance reference sample having a dielectric film formed thereon changes according to a film thickness of the dielectric film due to interference of reflection from a surface of the dielectric film on a laser light incident side and reflection from a surface of the dielectric film on a back side thereof. FIG. 28A illustrates a relationship between a reflectance and a film thickness of ZnS used in Embodiment 2.

FIG. 28B illustrates a reflectance in another configuration example of the reflectance reference sample 303 of Embodiment 2. In the configuration example, a dielectric film $SiO_2$ is formed by sputtering on the dielectric film ZnS formed on the transparent flat plate 402, and a dielectric film ZnS is further formed by sputtering. A reflectance of the reflectance reference sample 303 having this structure changes with respect to the film thickness of the dielectric film ZnS when a film thickness of $SiO_2$ is 133 nm, as illustrated in FIG. 28B.

From the above, the reflectance reference sample 303 can be either (a) a single dielectric film or (b) a multilayer structure made of two or more types of dielectric films, and the reflectance of the reflectance reference sample 303 can be set to a predetermined value by appropriately selecting the film thickness of each film.

Examples of the particles to be measured in the invention include metal particles and plastic particles in addition to proteins. The reflectance differs depending on the type of particles, but in any case, the actual measurement sample is a dispersion of submicron-sized particles in a solvent, and thus an absolute value of the reflectance does not become large. From the viewpoint that the laser light power in the actual measurement and the laser light power in the reflectance reference sample measurement need to be the same for correct sensitivity adjustment, it is preferable not to set the reflectance absolute value of the reflectance reference sample to a large value.

In the structure (a), a reflectance between a minimum reflectance value of about 4% and a maximum reflectance value of about 23% can be obtained. When the reflectance reference sample is required to have a reflectance of 4% or more, the structure (a) is preferable since it is simple and easy to fabricate. However, when the reflectance reference sample is required to have a reflectance lower than 4%, the structure cannot be implemented. In the structure (b), a reflectance between a minimum reflectance value of about 2% and a maximum reflectance value of about 49% can be obtained. In particular, when the reflectance reference sample is required to have a reflectance of 3% or less, a film thickness range of ZnS where the reflectance is 3% is wide, 0 nm to 20 nm and 160 nm to 200 nm, which is preferable in that the structure has high robustness.

When the particle to be measured has a size equal to or larger than a light spot size, the reflectance may be high depending on a material and a composition of the particle. In this case, the material and the film thickness of the dielectric film may be selected to achieve a configuration corresponding to a target particle reflectance.

<Embodiment 3>

In Embodiment 3 of the invention, a specific example of the reflectance reference sample 303 will be described. A configuration and a measurement procedure of a particle measurement apparatus are the same as those in Embodiments 1 and 2.

(Reflectance Reference Sample)

An ultraviolet curable resin (DVD310) manufactured by Nippon Kayaku Co., Ltd. was used as a substance in contact with the transparent flat plate 402 of the reflectance reference sample 303 in FIG. 4. When bubbles are mixed in a boundary surface, the bubbles affect a reflection signal. To avoid this, the ultraviolet curable resin was placed in a vacuum chamber and degassed by evacuating for 10 minutes. Thereafter, the resin was injected into the container 403, and the resin was cured by irradiation with ultraviolet rays of about 300 $mJ/cm_2$ by an ultraviolet irradiation apparatus (ECS-201G1) manufactured by Eye Graphics Co., Ltd.

(Refractive Index: for Protein)

A reflectance from a boundary surface is proportional to a refractive index difference between the two substances. For example, when protein particles are targeted as a sample for measuring size distribution, a refractive index difference between a solvent and the protein particle is approximately 0.06. In the reflectance reference sample using the above-described ultraviolet curable resin, a refractive index of the ultraviolet curable resin DVD310 after curing is 1.50, and when borosilicate glass having a refractive index of 1.52 is used for a transparent flat plate, a difference in refractive index between the two is 0.02, so that a reflectance from the protein particles and an interface reflectance are also approximately the same.

Accordingly, the reflectance reference sample 303 can be measured under laser power conditions same as those for measuring the size distribution of protein particles, and the sensitivity coefficient K under these conditions can be obtained. A difference in laser power conditions may cause a difference in sensitivity coefficient, but according to the method of the invention, this possibility is eliminated, and more accurate sensitivity correction is possible, and thus the particle size can be accurately measured.

It is desirable for the reflectance reference sample 303 to have little optical temporal change and be usable for a long period of time.

As the substance in contact with the transparent flat plate 402 of the reflectance reference sample 303, instead of the ultraviolet curable resin (DVD310) manufactured by Nippon Kayaku Co., Ltd., another ultraviolet curable resin was used to prepare a sample having a different refractive index. When the measurement for obtaining the sensitivity coefficient K was performed for each, the laser power conditions were as follows.

n: laser power condition

1.41: power lower than that for protein particle sample measurement
1.43: power substantially equal to that for protein particle sample measurement
1.48: power substantially equal to that for protein particle sample measurement
1.50: power substantially equal to that for protein particle sample measurement
1.52: power higher than that for protein particle sample measurement

From these results, the refractive index of the substance in contact with the transparent flat plate 402 of the reflectance reference sample 303 is preferably 1.43 or more and 1.50 or less.

FIG. 29 illustrates another configuration example of the reflectance reference sample 303. In the above embodiment, the ultraviolet curable resin (DVD310) manufactured by Nippon Kayaku Co., Ltd. or the like is used as the substance in contact with the transparent flat plate 402, but a liquid resin (immersion oil for a microscope objective lens or the like) can be used instead. In FIG. 16, reference numeral 1601 denotes a liquid resin thereof. In this case, sealing is performed with a sealing tape or the like such that the liquid does not leak.

(Usage of Reflectance Reference Sample)

When measuring a plurality of actual samples, the reflectance reference sample 303 may be measured only once at the start of measurement, or the reflectance reference sample 303 may be measured for each measurement of the plurality of actual samples.

When a measurement time required to measure an actual sample is relatively short, changes in environmental temperature and laser temperature during the actual sample measurement are relatively small, and thus it is sufficient to measure the reflectance reference sample once at the start of the measurement and perform sensitivity correction, thereby shortening an overall time required for the measurement.

On the other hand, when the measurement time required to measure an actual sample is relatively long, there is a possibility that the environmental temperature or the laser temperature may change during the measurement. Therefore, in order to perform more accurate measurement, it is necessary to measure the reflectance reference sample for each measurement of the plurality of actual samples and redo the sensitivity correction each time. At this time, the reflectance reference sample may be measured and the sensitivity correction may be redone each time after a certain number of actual sample measurements are measured, rather than after each individual measurement.

An operator can decide how long or short the measurement time for the actual sample is. In this case, the measurement time when a similar sample is measured in the past may be used as a reference. However, when measuring a plurality of unknown samples, it is preferable to perform sensitivity correction again each time.

<Regarding Modification of Invention>

The invention is not limited to the above-described embodiments and includes various modifications. For example, the above-described embodiments have been described in detail to facilitate understanding of the invention, and the invention is not necessarily limited to those including all the configurations described above. A part of a configuration according to a certain embodiment can be replaced with a configuration according to another embodiment, and a configuration according to another embodiment can be added to a configuration according to a certain embodiment. In addition, another configuration can be added to a part of a configuration of each embodiment, and the part of the configuration of each embodiment can be deleted or replaced with another configuration.

In the above embodiment, the reflectance reference sample 303 may be implemented as a component of the particle measurement apparatus, or may be implemented as, for example, a separate member detachable from the particle measurement apparatus.

In the above embodiment, the objective lens 108 and the drive mechanism 109 serve as an irradiation unit that condenses signal light and irradiates a sample with the signal light, and the detection optical system 112 serves as a detection unit that detects an interference signal generated by making the signal light and interference light interfere with each other.

Reference Signs List

100: light source
101: laser driver
102: collimator lens
103: λ/2 plate

104: polarized beam splitter
105: λ/4 plate
106: reference light mirror
107: composite deflection element
108: objective lens
109: drive mechanism
111: pinhole
112: detection optical system
113: half beam splitter
114: λ/4 plate
115: condensing lens
116: polarized beam splitter
118: λ/2 plate
119: condensing lens
120: polarized beam splitter
122: detection signal
123: detection signal
124: signal processing unit
125: information holding unit
126: display unit
150: photodetector
151: photodetector
152: current differential amplifier
153: photodetector
154: photodetector
155: current differential amplifier
200: sample container
201: metal plate
202: transparent window
203: resin member forming well of sample container
204: sample
302: frame
303: reflectance reference sample
304: sample container
400: condensed light
402: transparent flat plate
403: container
404: substance
405: transparent window for measurement
1001: sample stage
1002: metal plate
1201: ID information
1202: outer diameter of transparent window 405
1203: container opening

## Claims

**1.** A reference sample used to calibrate a measurement result of a size of a particle contained in a liquid sample in a particle measurement apparatus that measures the size by irradiating the sample with light, the reference sample comprising:

a reference sample window having a material and a thickness same as those of a sample container window provided in a sample container containing the sample; and
a substance having a reflectance whose difference with a reflectance of the sample is within an acceptable range, the substance being formed at a position in contact with the reference sample window, wherein
the reference sample window is formed on a transparent flat plate disposed at a bottom of the reference sample, a thickness of the transparent flat plate is in a range of 175 μm ± 70 μm, and a refractive index of the transparent flat plate is in a range of 1.520 ± 0.22,
a shape pattern representing ID information for identifying the reference sample is formed on any surface of the transparent flat plate, and
the shape pattern is optically readable.

**2.** The reference sample according to claim 1, wherein
the ID information includes information representing an orientation of the shape pattern.

**3.** The reference sample according to claim 2, wherein

the shape pattern has a shape whose outer periphery is a rectangle, and
the shape pattern includes a portion representing information indicating an orientation of the shape pattern on at least one of four corners of the rectangle.

**4.** The reference sample according to claim 2, wherein

the shape pattern has a shape whose outer periphery is a rectangle, and
the shape pattern includes a portion representing information indicating a position of the shape pattern on at least one of four sides of the rectangle.

**5.** The reference sample according to claim 1, wherein

the shape pattern is formed by a dot pattern,
the dot pattern represents the ID information by a combination of a size of dots and a planar density of the dots, and
the dot pattern is disposed such that the dots do not overlap each other in any combination of the size and the planar density.

**6.** The reference sample according to claim 1, wherein
the reference sample includes a cutout portion representing an orientation of the reference sample.

**7.** The reference sample according to claim 1, wherein

a planar size of the shape pattern is approximately 300 μm × approximately 300 μm, and
the ID information is represented by disposing a plurality of shape patterns representing the ID information in a planar region smaller than the planar size.

**8.** The reference sample according to claim 1, wherein

a planar size of the shape pattern is approximately 600 μm × approximately 2000 μm, and
the ID information is represented by disposing a plurality of shape patterns representing the ID information in a planar region smaller than the planar size.

**9.** The reference sample according to claim 1, wherein

the ID information includes at least information on a type of the reference sample,
the ID information further includes at least one of a serial number of the reference sample, a type of the reference sample, the refractive index of the reference sample, and a laser power of the light to be applied to the reference sample, and
the ID information includes 4 bytes or more of information.

**10.** The reference sample according to claim 1, wherein

the shape pattern is formed on a surface of the transparent flat plate that is in contact with the substance,
the shape pattern is disposed below a side wall of a container containing the substance in the reference sample, and
a reflectance of the shape pattern is twice or more a reflectance of the side wall.

**11.** The reference sample according to claim 1, wherein

the shape pattern is formed on a surface of the transparent flat plate that is in contact with the substance,
the shape pattern is disposed between the substance and the transparent flat plate, and
a reflectance of the shape pattern is twice or more a reflectance of the substance or half or less the reflectance of the substance.

**12.** The reference sample according to claim 1, wherein

the shape pattern is formed on a surface of the transparent flat plate that is not in contact with the substance,
the shape pattern is disposed below a side wall of a container containing the substance in the reference sample, and
a reflectance of the shape pattern is twice or more a reflectance of the side wall or half or less the reflectance of the side wall.

**13.** A particle measurement apparatus for measuring a size of a particle contained in a liquid sample, the particle measurement apparatus comprising:

a light source configured to emit light;
a branching unit configured to branch the light from the light source into signal light and reference light;
an irradiation unit configured to condense the signal light and irradiate the sample with the signal light;
a detection unit configured to detect an interference signal obtained by making reflected light from the particle and the reference light interfere with each other; and
a processing unit configured to measure a size of the sample using the interference signal detected by the detection unit and calibrate the size using a measurement result of a reference sample, wherein
the reference sample includes

a reference sample window having a material and a thickness same as those of a sample container window provided in a sample container containing the sample, and
a substance having a reflectance whose difference with a reflectance of the sample is within an acceptable range, the substance being formed at a position in contact with the reference sample window,

the reference sample window is formed on a transparent flat plate disposed at a bottom of the reference sample,
a thickness of the transparent flat plate is in a range of 175 $\mu$m $\pm$ 70 $\mu$m, and a refractive index of the transparent flat plate is in a range of 1.520 $\pm$ 0.22,
a shape pattern representing ID information for identifying the reference sample is formed on any surface of the transparent flat plate,
the shape pattern is optically readable, and
the processing unit reads the ID information based on a signal obtained by irradiating the reference sample with the light.

**14.** A particle measurement method for measuring a size of a particle contained in a liquid sample, the particle measurement method comprising:

a step of emitting light from a light source;
a step of branching the light from the light source into signal light and reference light;
a step of condensing the signal light and irradiating the sample with the signal light;
a step of detecting an interference signal obtained by making reflected light from the particle and the reference light interfere with each other; and
a step of measuring a size of the sample using the detected interference signal; and
a step of calibrating the size using a reference sample, wherein
the reference sample includes

a reference sample window having a material and a thickness same as those of a sample container window provided in a sample container containing the sample, and
a substance having a reflectance whose difference with a reflectance of the sample is within an acceptable range, the substance being formed at a position in contact with the reference sample window,

the reference sample window is formed on a transparent flat plate disposed at a bottom of the reference sample,
a thickness of the transparent flat plate is in a range of 175 $\mu$m $\pm$ 70 $\mu$m, and a refractive index of the transparent flat plate is in a range of $1.520 \pm 0.22$,
a shape pattern representing ID information for identifying the reference sample is formed on any surface of the transparent flat plate,
the shape pattern is optically readable, and
in the step of calibrating, the ID information is read based on a signal obtained by irradiating the reference sample with the light.

**15.** The particle measurement method according to claim 14, further comprising:

a step of determining whether the reference sample is of a type suitable for calibrating the size and performing the above processing when the reference sample is not suitable, wherein
in the step of determining, it is determined whether the reference sample is suitable based on whether information representing the type of the reference sample described in the ID information corresponds to the sample.

FIG. 1

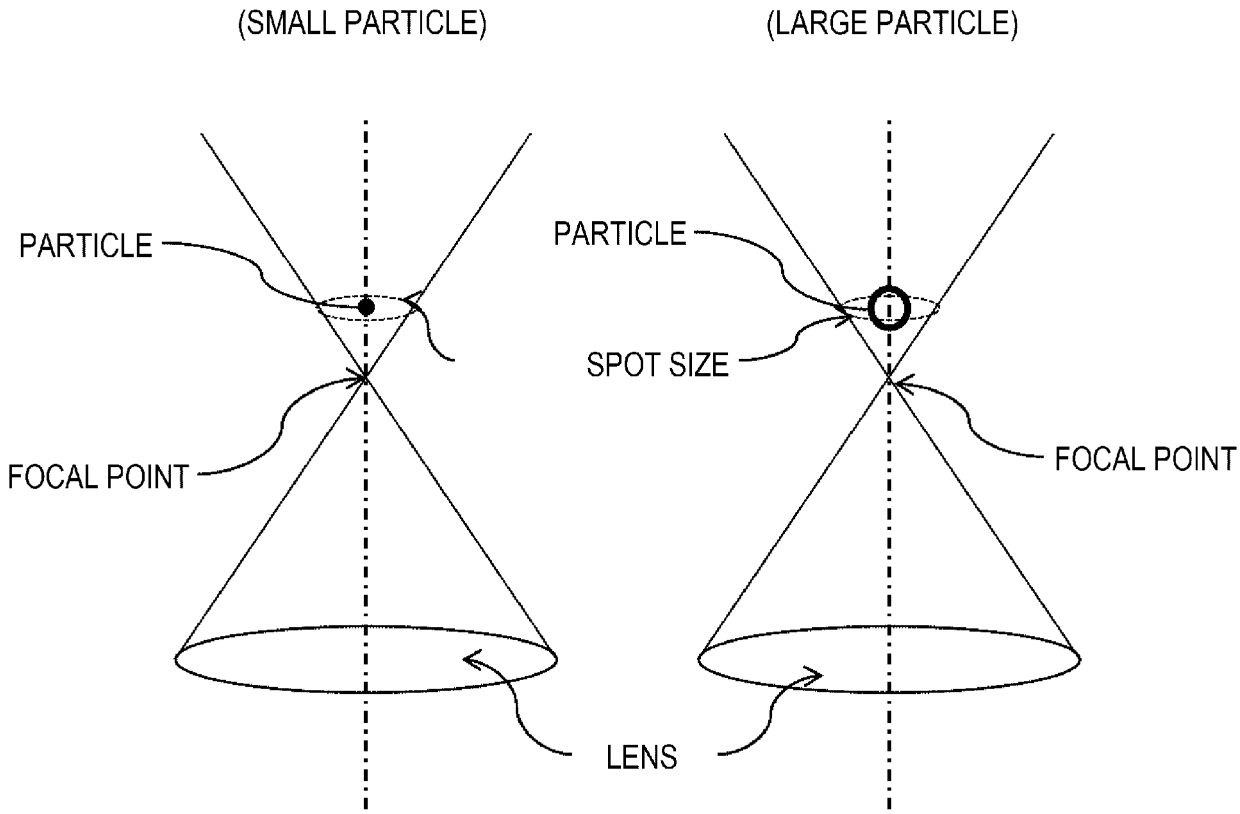
(SMALL PARTICLE)
(LARGE PARTICLE)
PARTICLE
PARTICLE
SPOT SIZE
FOCAL POINT
FOCAL POINT
LENS

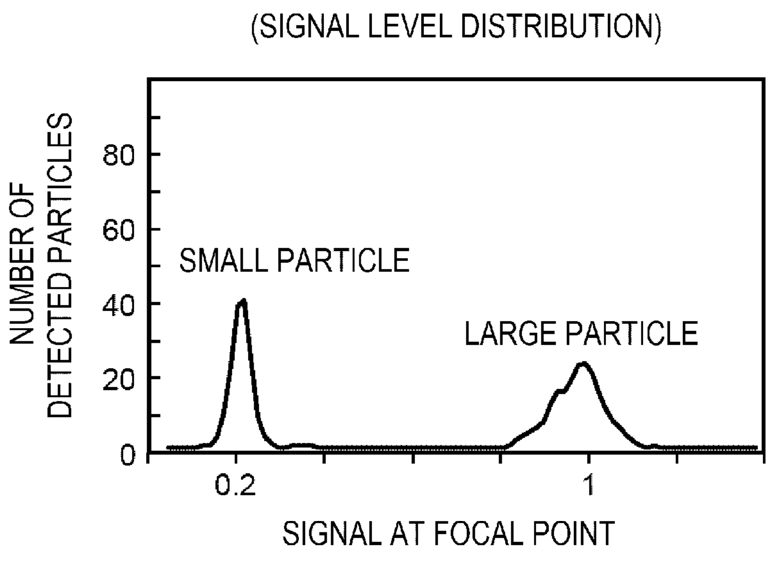
(SIGNAL LEVEL DISTRIBUTION)
NUMBER OF DETECTED PARTICLES
80
60
40
20
0
SMALL PARTICLE
LARGE PARTICLE
0.2
1
SIGNAL AT FOCAL POINT

FIG. 2

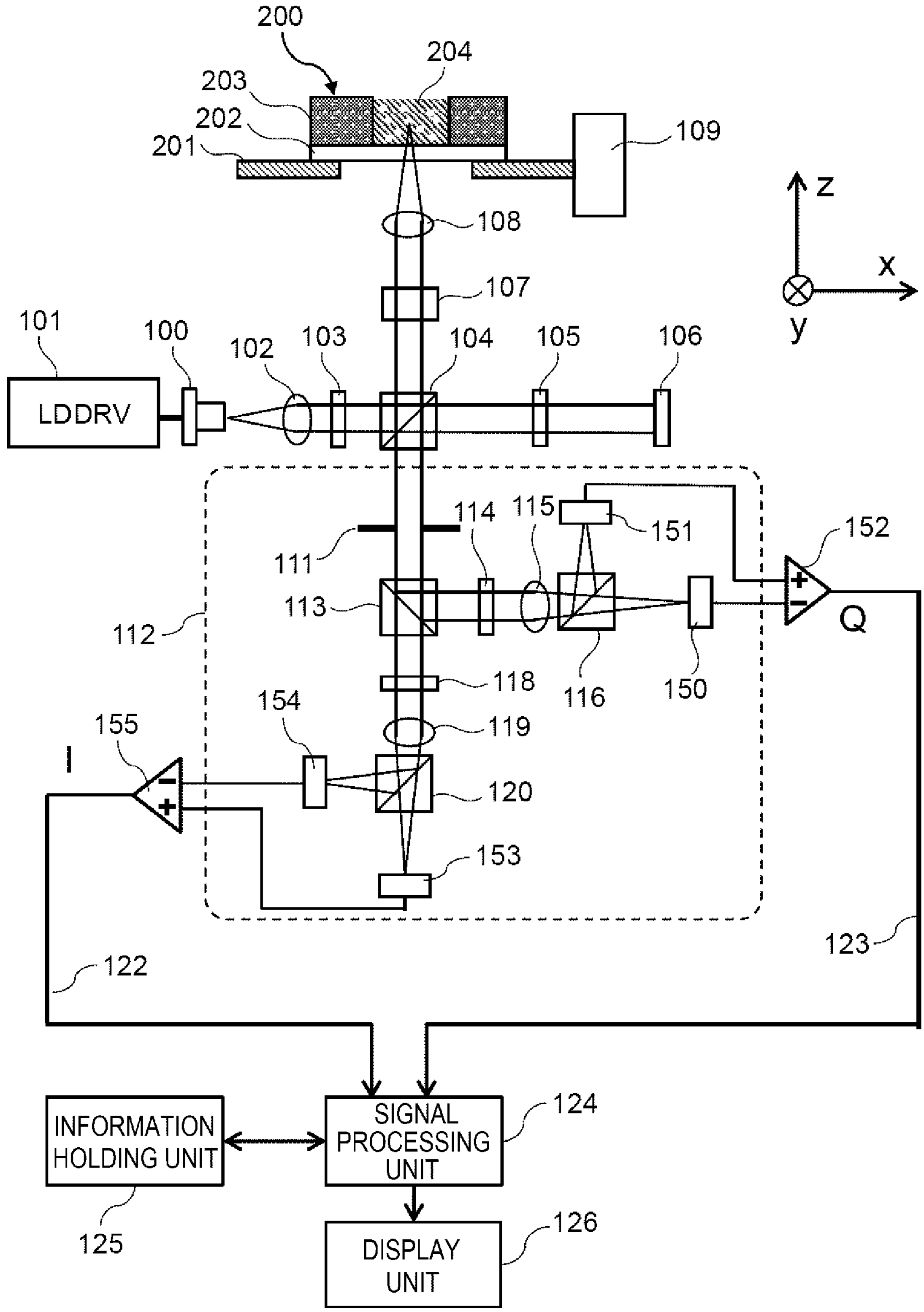
200
204
203
202
201
109
z
x
y
108
107
101
100
102
103
104
105
106
LDDRV
114
115
151
152
111
113
112
Q
118
116
150
154
155
I
119
120
153
122
123
INFORMATION HOLDING UNIT
SIGNAL PROCESSING UNIT
124
125
DISPLAY UNIT
126

FIG. 3A

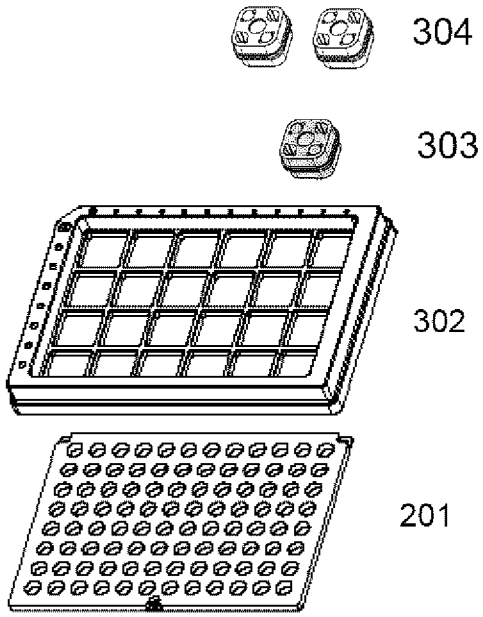


FIG. 3B

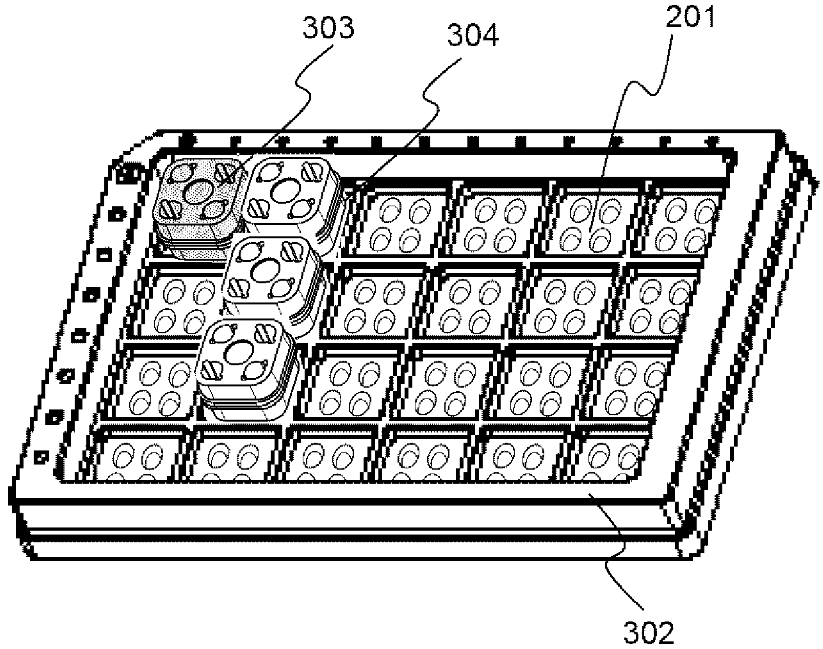

FIG. 4

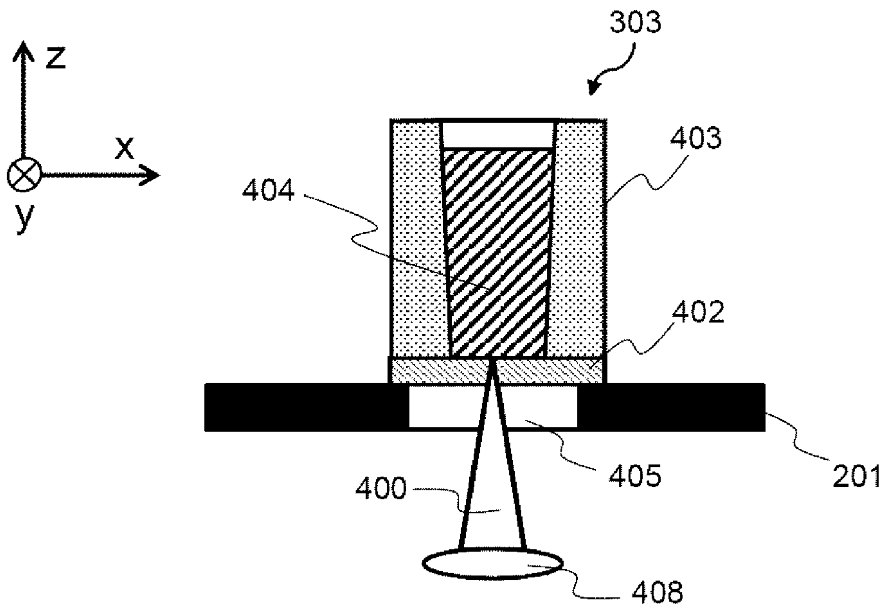

FIG. 5A

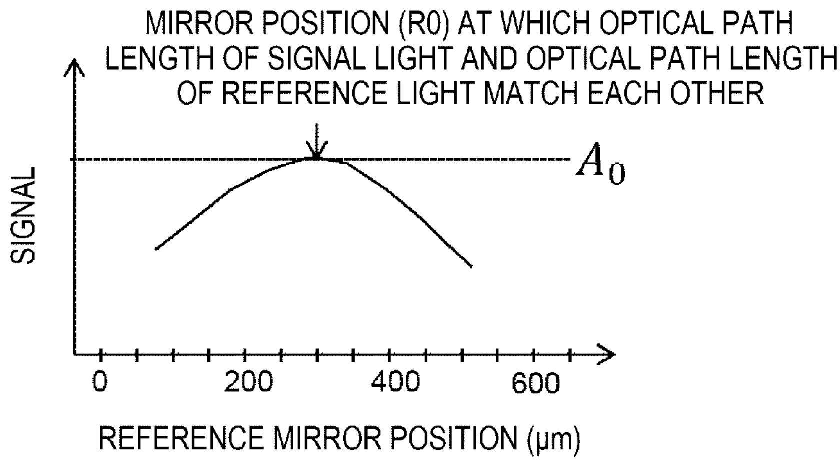
MIRROR POSITION (R0) AT WHICH OPTICAL PATH LENGTH OF SIGNAL LIGHT AND OPTICAL PATH LENGTH OF REFERENCE LIGHT MATCH EACH OTHER
$A_0$
SIGNAL
0
200
400
600
REFERENCE MIRROR POSITION (μm)

FIG. 5B

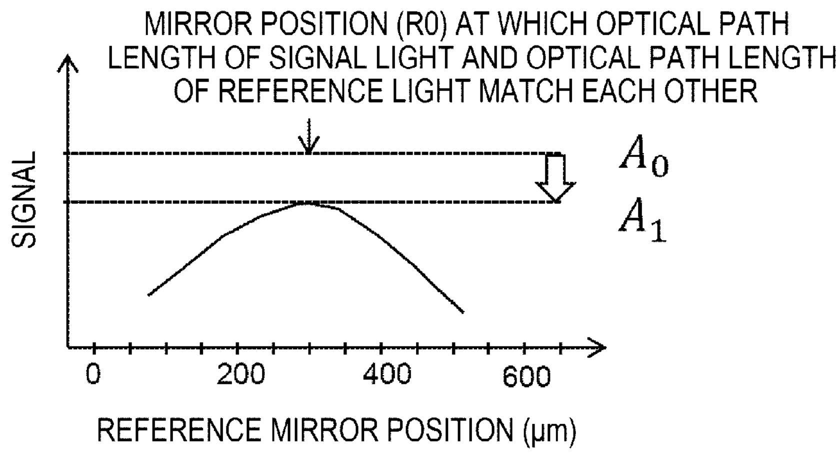
MIRROR POSITION (R0) AT WHICH OPTICAL PATH LENGTH OF SIGNAL LIGHT AND OPTICAL PATH LENGTH OF REFERENCE LIGHT MATCH EACH OTHER
$A_0$
$A_1$
SIGNAL
0
200
400
600
REFERENCE MIRROR POSITION (μm)

FIG. 6

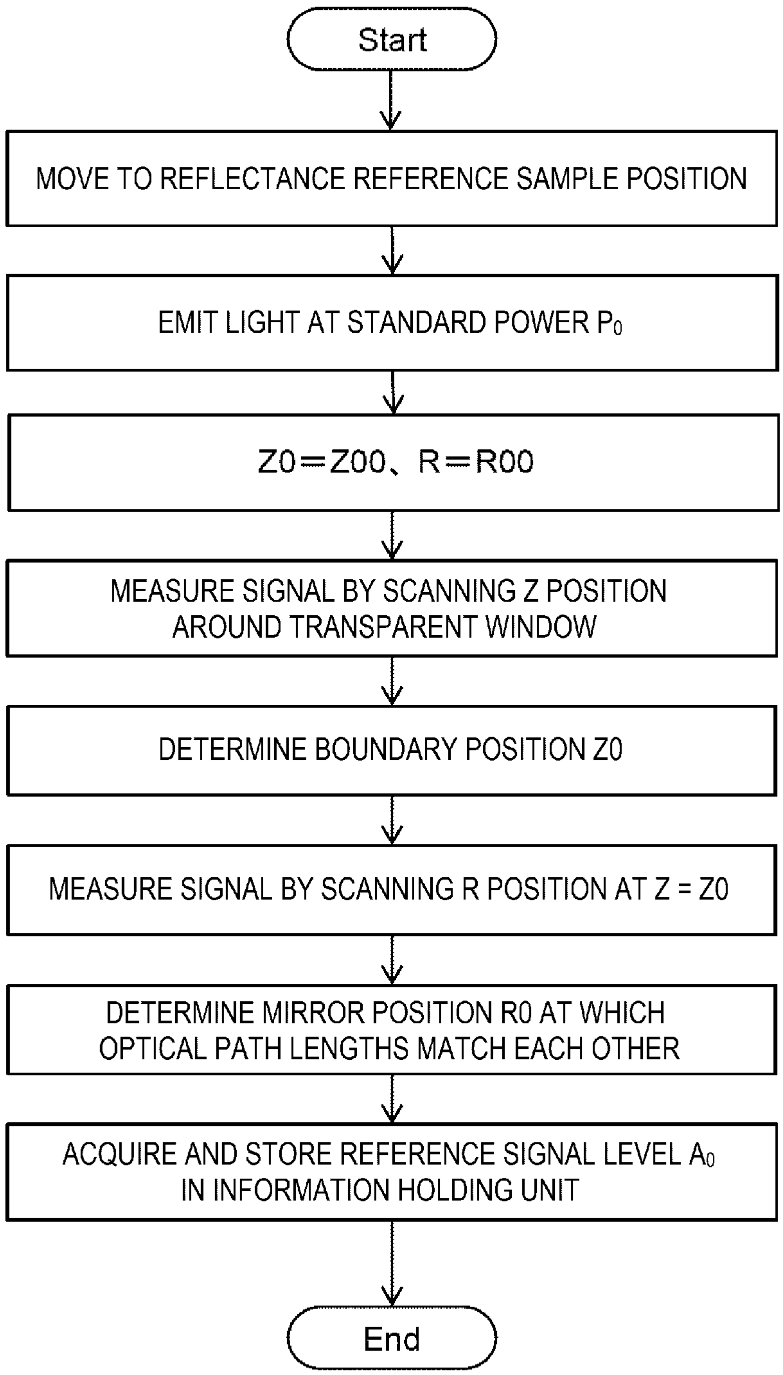
Start
MOVE TO REFLECTANCE REFERENCE SAMPLE POSITION
EMIT LIGHT AT STANDARD POWER $P_0$
Z0=Z00、R=R00
MEASURE SIGNAL BY SCANNING Z POSITION AROUND TRANSPARENT WINDOW
DETERMINE BOUNDARY POSITION Z0
MEASURE SIGNAL BY SCANNING R POSITION AT Z = Z0
DETERMINE MIRROR POSITION R0 AT WHICH OPTICAL PATH LENGTHS MATCH EACH OTHER
ACQUIRE AND STORE REFERENCE SIGNAL LEVEL $A_0$ IN INFORMATION HOLDING UNIT
End

FIG. 7

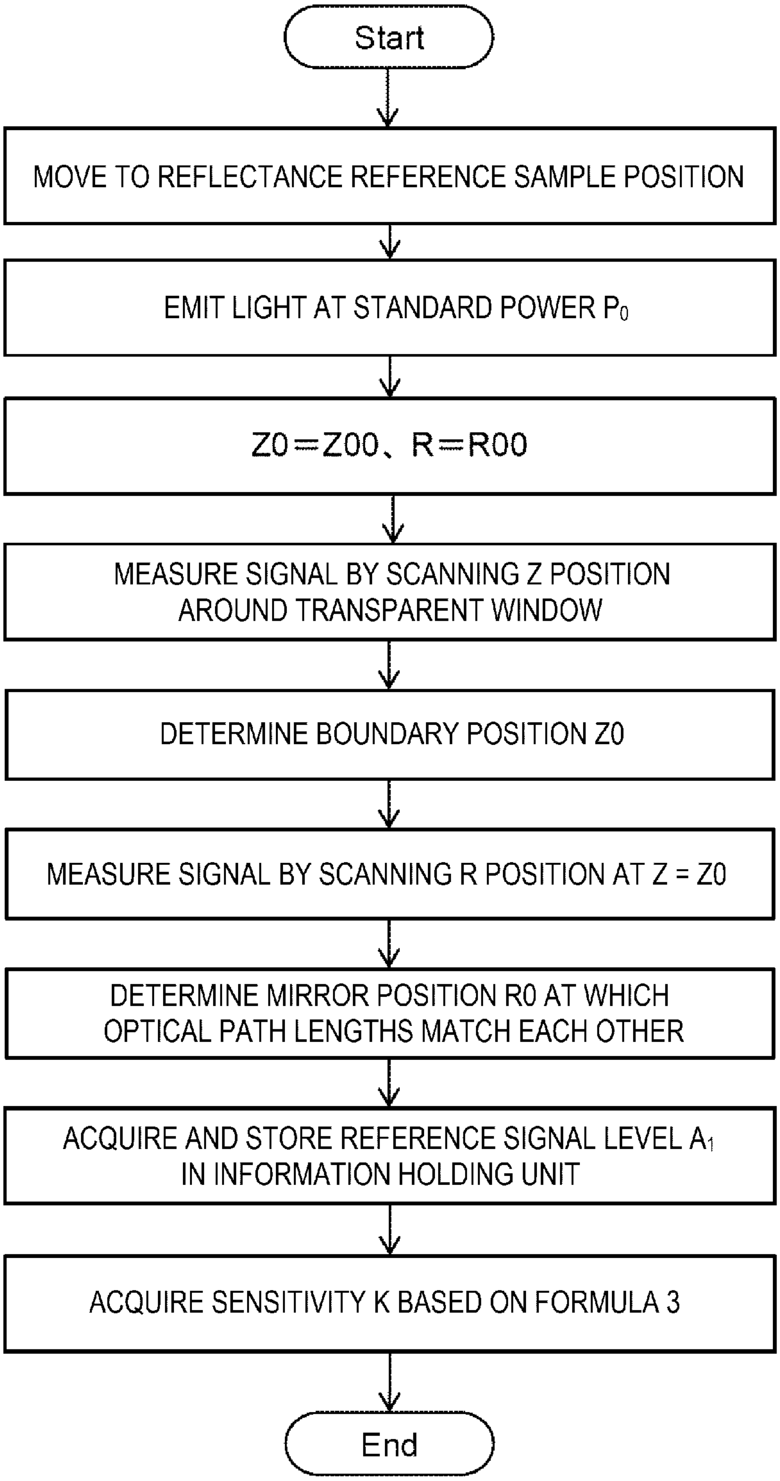
Start
MOVE TO REFLECTANCE REFERENCE SAMPLE POSITION
EMIT LIGHT AT STANDARD POWER $P_0$
Z0＝Z00、R＝R00
MEASURE SIGNAL BY SCANNING Z POSITION AROUND TRANSPARENT WINDOW
DETERMINE BOUNDARY POSITION Z0
MEASURE SIGNAL BY SCANNING R POSITION AT Z = Z0
DETERMINE MIRROR POSITION R0 AT WHICH OPTICAL PATH LENGTHS MATCH EACH OTHER
ACQUIRE AND STORE REFERENCE SIGNAL LEVEL $A_1$ IN INFORMATION HOLDING UNIT
ACQUIRE SENSITIVITY K BASED ON FORMULA 3
End

FIG. 8

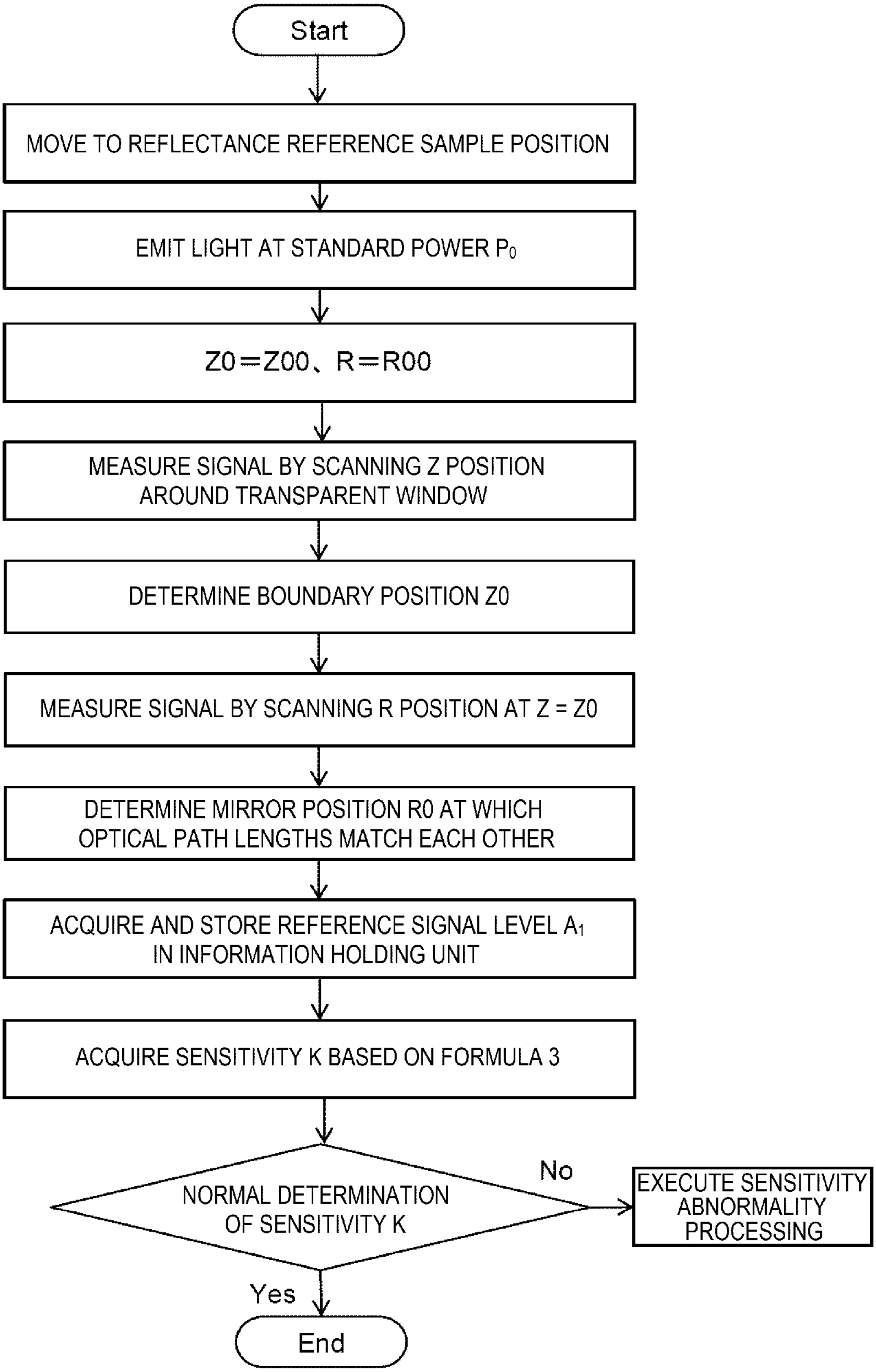
Start
MOVE TO REFLECTANCE REFERENCE SAMPLE POSITION
EMIT LIGHT AT STANDARD POWER $P_0$
Z0＝Z00、R＝R00
MEASURE SIGNAL BY SCANNING Z POSITION AROUND TRANSPARENT WINDOW
DETERMINE BOUNDARY POSITION Z0
MEASURE SIGNAL BY SCANNING R POSITION AT Z = Z0
DETERMINE MIRROR POSITION R0 AT WHICH OPTICAL PATH LENGTHS MATCH EACH OTHER
ACQUIRE AND STORE REFERENCE SIGNAL LEVEL $A_1$ IN INFORMATION HOLDING UNIT
ACQUIRE SENSITIVITY K BASED ON FORMULA 3
NORMAL DETERMINATION OF SENSITIVITY K
No
EXECUTE SENSITIVITY ABNORMALITY PROCESSING
Yes
End

FIG. 9

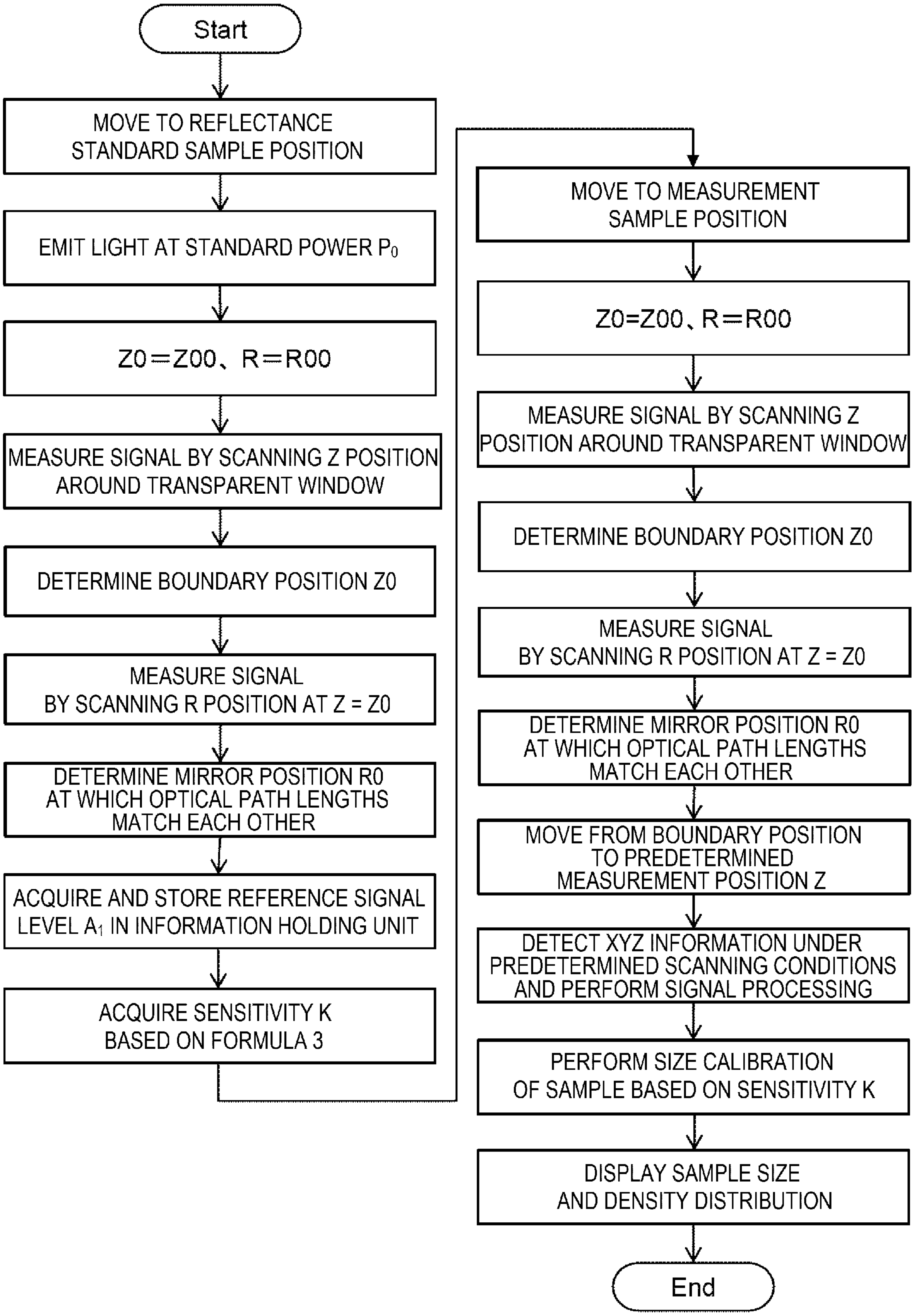
Start
MOVE TO REFLECTANCE STANDARD SAMPLE POSITION
EMIT LIGHT AT STANDARD POWER $P_0$
Z0=Z00、R=R00
MEASURE SIGNAL BY SCANNING Z POSITION AROUND TRANSPARENT WINDOW
DETERMINE BOUNDARY POSITION Z0
MEASURE SIGNAL BY SCANNING R POSITION AT Z = Z0
DETERMINE MIRROR POSITION R0 AT WHICH OPTICAL PATH LENGTHS MATCH EACH OTHER
ACQUIRE AND STORE REFERENCE SIGNAL LEVEL $A_1$ IN INFORMATION HOLDING UNIT
ACQUIRE SENSITIVITY K BASED ON FORMULA 3
MOVE TO MEASUREMENT SAMPLE POSITION
Z0=Z00、R=R00
MEASURE SIGNAL BY SCANNING Z POSITION AROUND TRANSPARENT WINDOW
DETERMINE BOUNDARY POSITION Z0
MEASURE SIGNAL BY SCANNING R POSITION AT Z = Z0
DETERMINE MIRROR POSITION R0 AT WHICH OPTICAL PATH LENGTHS MATCH EACH OTHER
MOVE FROM BOUNDARY POSITION TO PREDETERMINED MEASUREMENT POSITION Z
DETECT XYZ INFORMATION UNDER PREDETERMINED SCANNING CONDITIONS AND PERFORM SIGNAL PROCESSING
PERFORM SIZE CALIBRATION OF SAMPLE BASED ON SENSITIVITY K
DISPLAY SAMPLE SIZE AND DENSITY DISTRIBUTION
End

FIG. 10

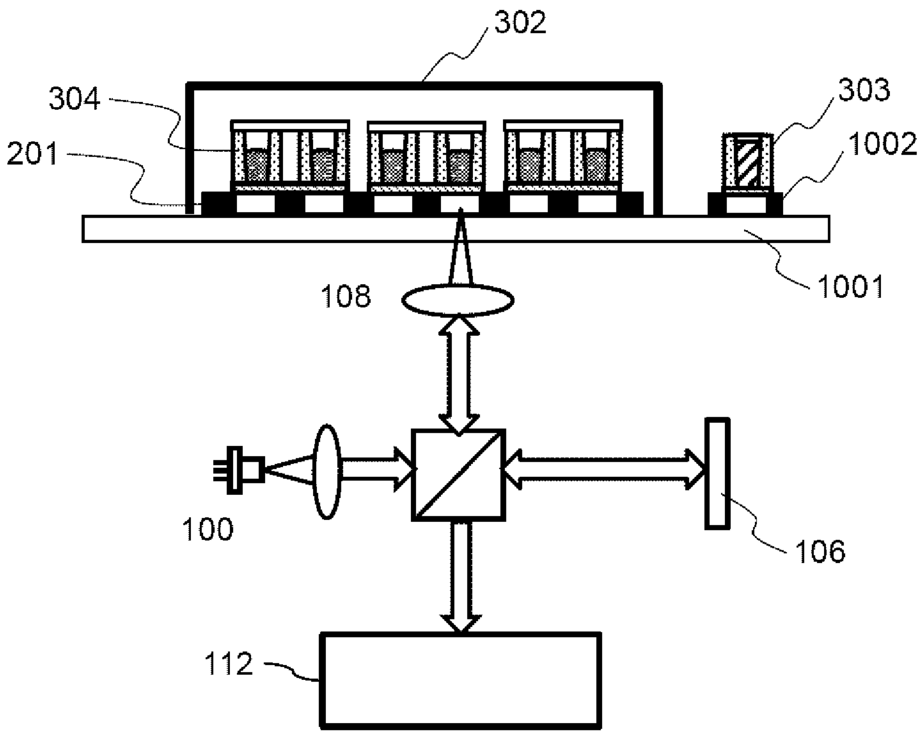

FIG. 11A

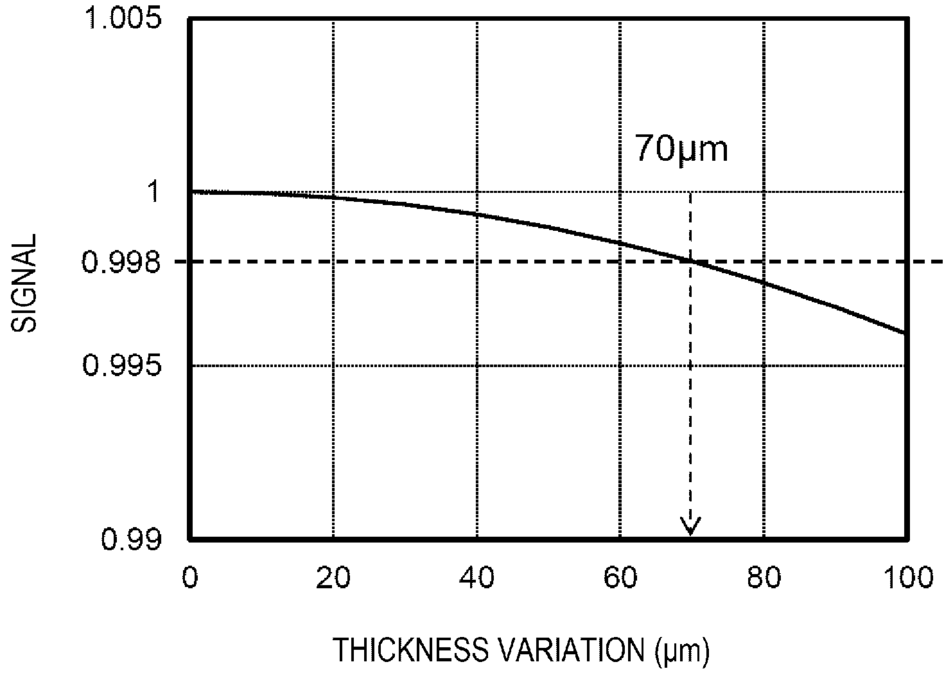


FIG. 11B

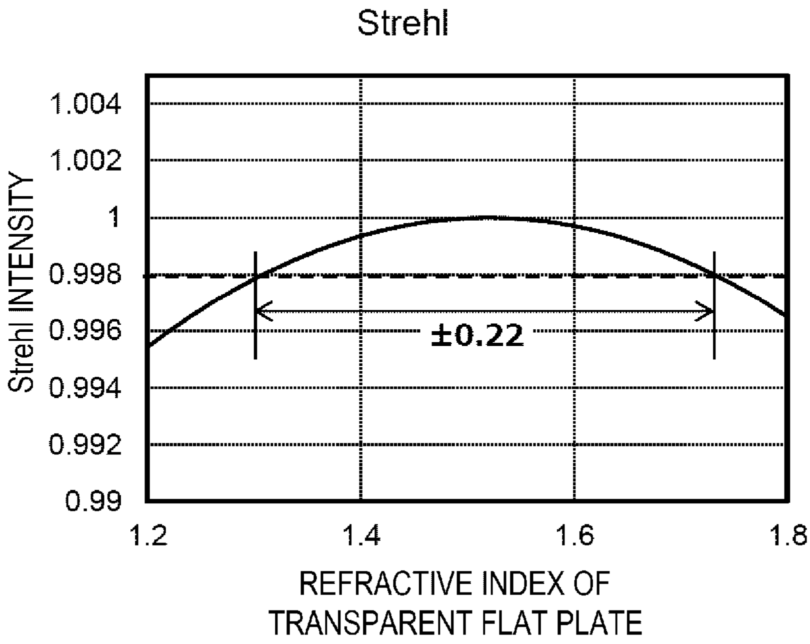

FIG. 12

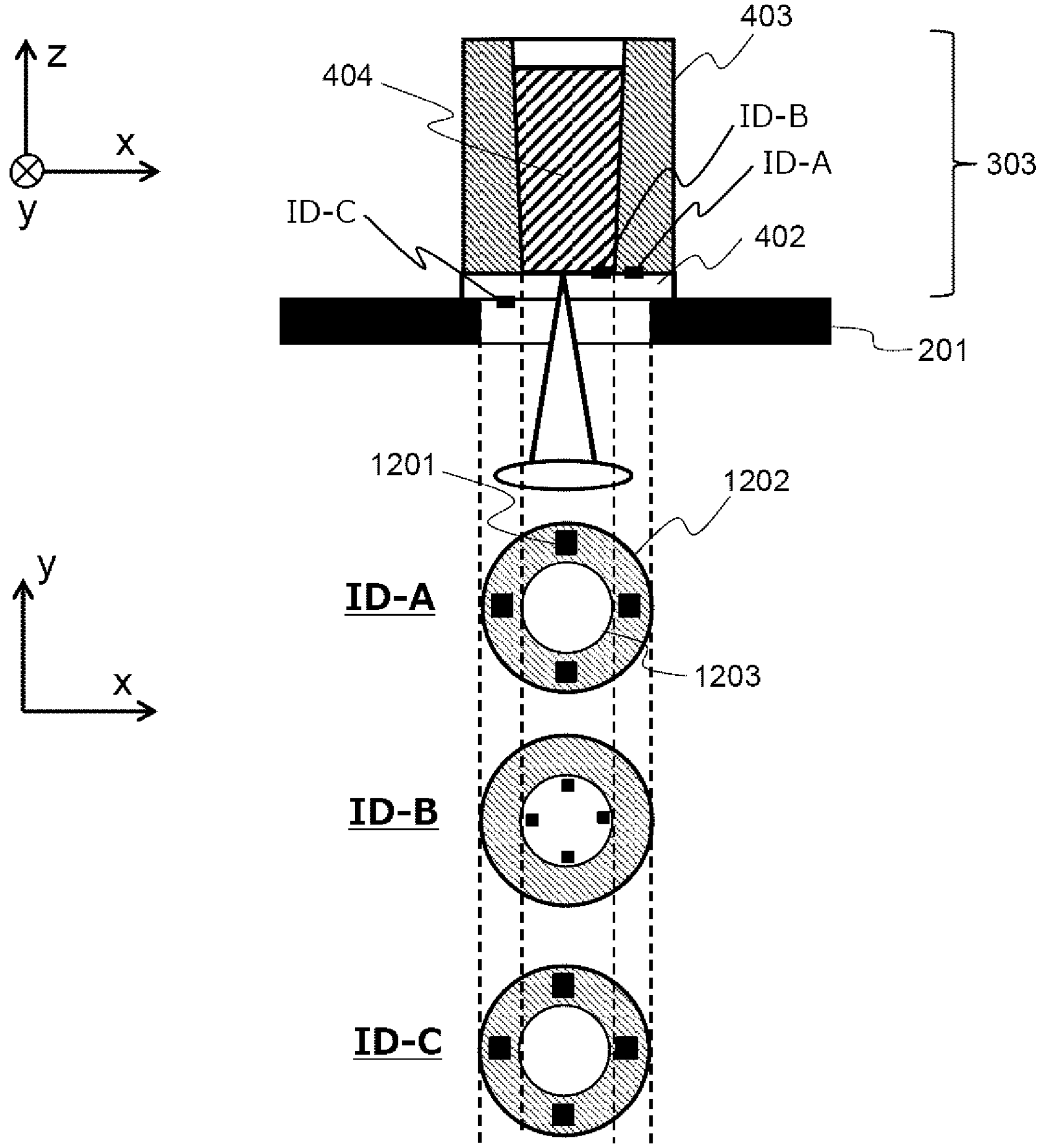
z
x
y
403
404
ID-B
ID-A
303
ID-C
402
201
1201
1202
y
ID-A
x
1203
ID-B
ID-C

FIG. 13

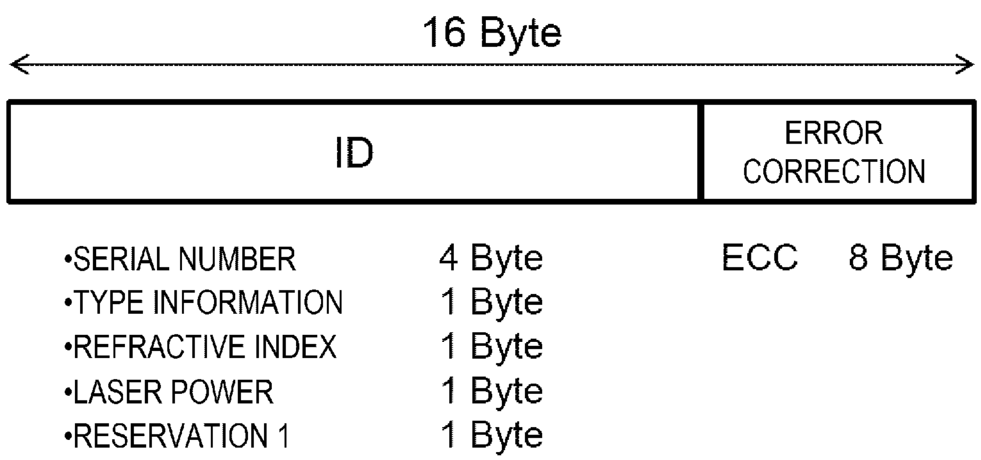
16 Byte
ID
ERROR CORRECTION
•SERIAL NUMBER 4 Byte
•TYPE INFORMATION 1 Byte
•REFRACTIVE INDEX 1 Byte
•LASER POWER 1 Byte
•RESERVATION 1 1 Byte
ECC 8 Byte

FIG. 14A

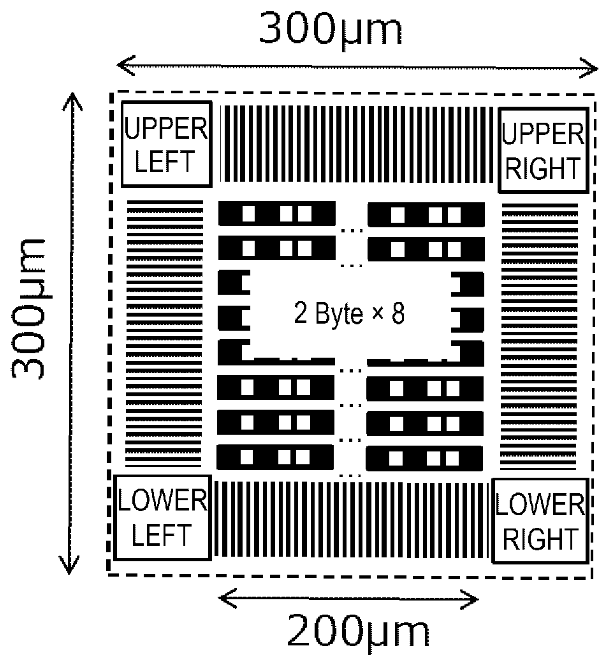


FIG. 14B

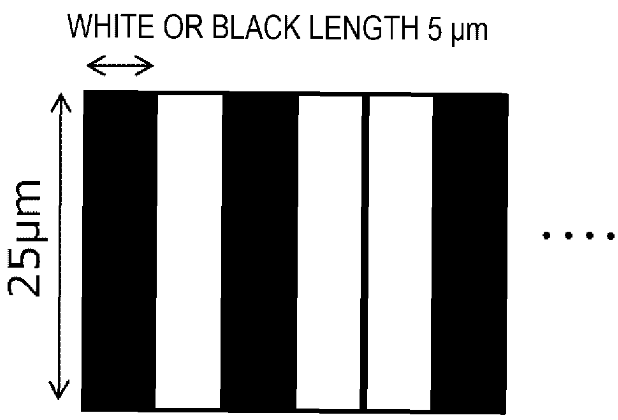

FIG. 15A

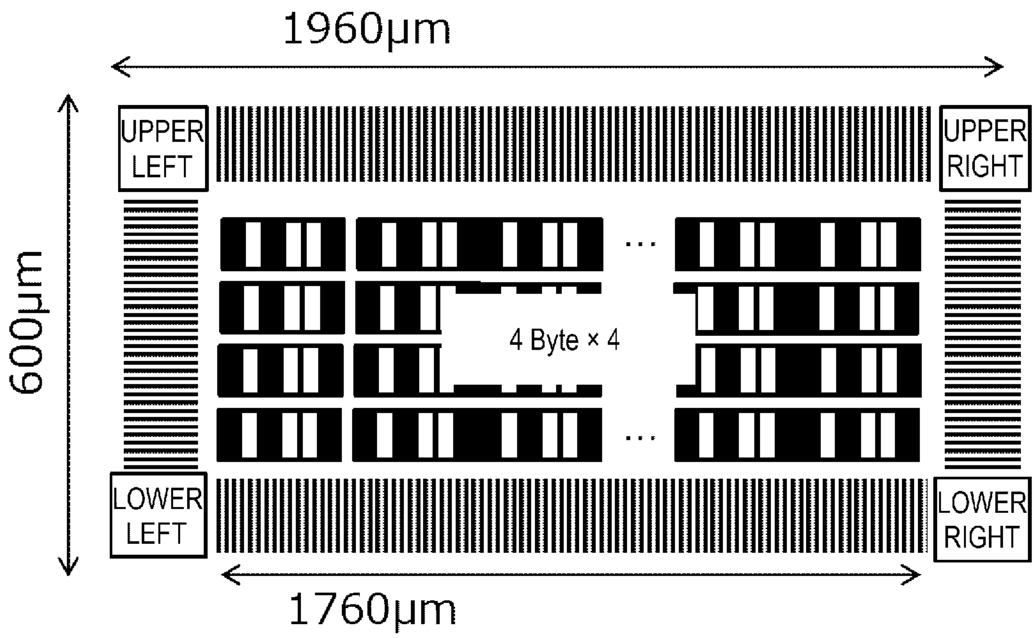


FIG. 15B

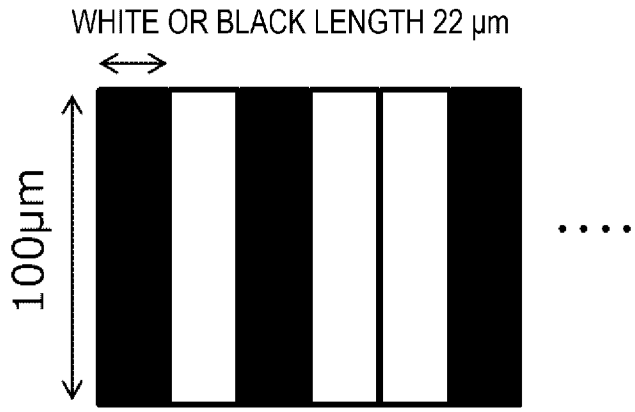

FIG. 16A

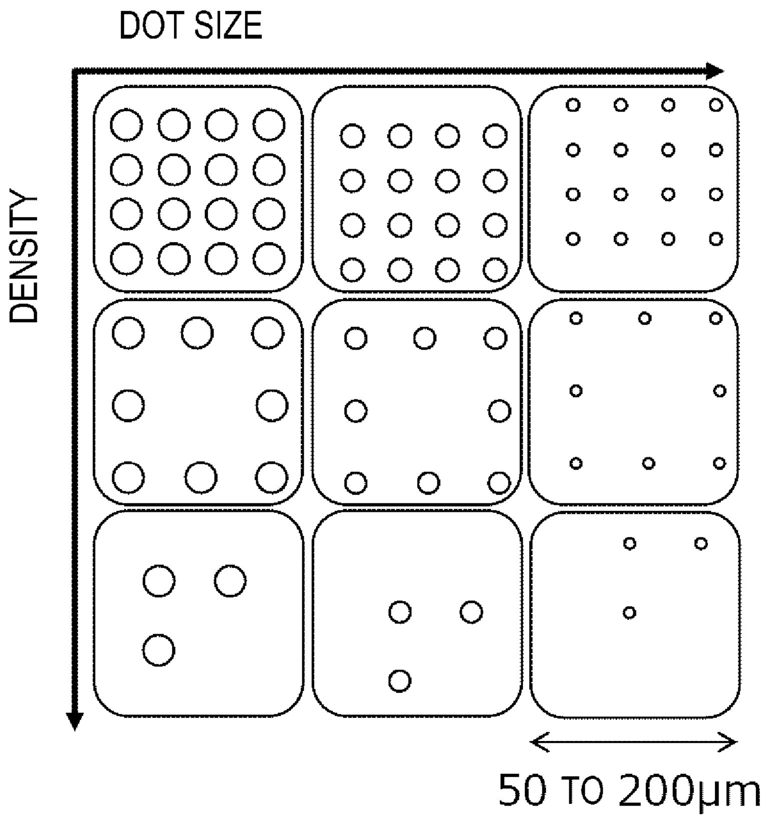


FIG. 16B

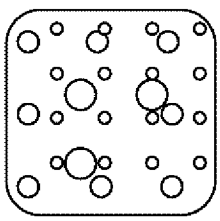

FIG. 17A

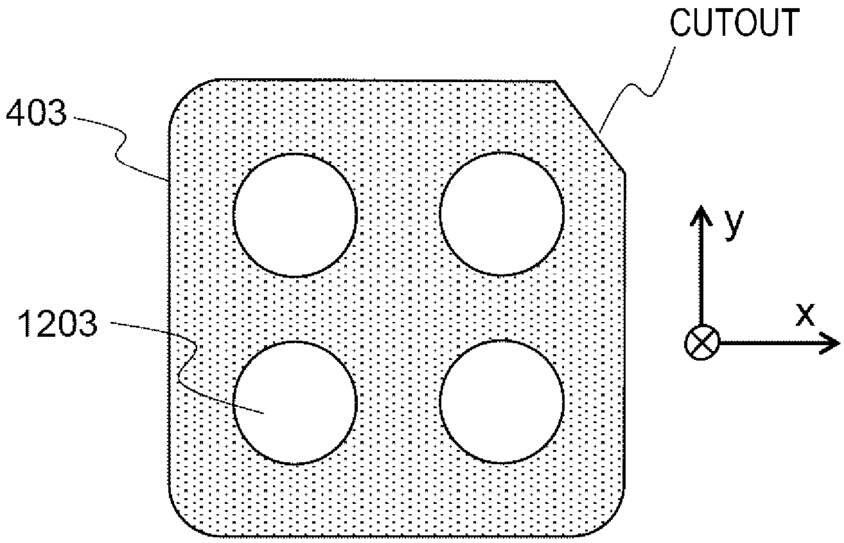


FIG. 17B

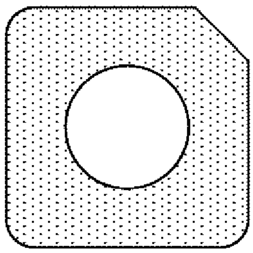

FIG. 17C

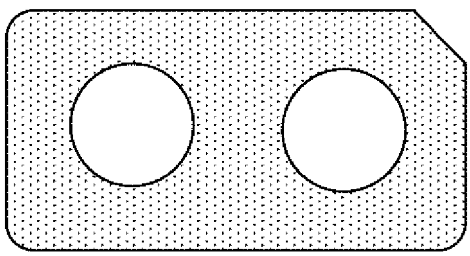

FIG. 18

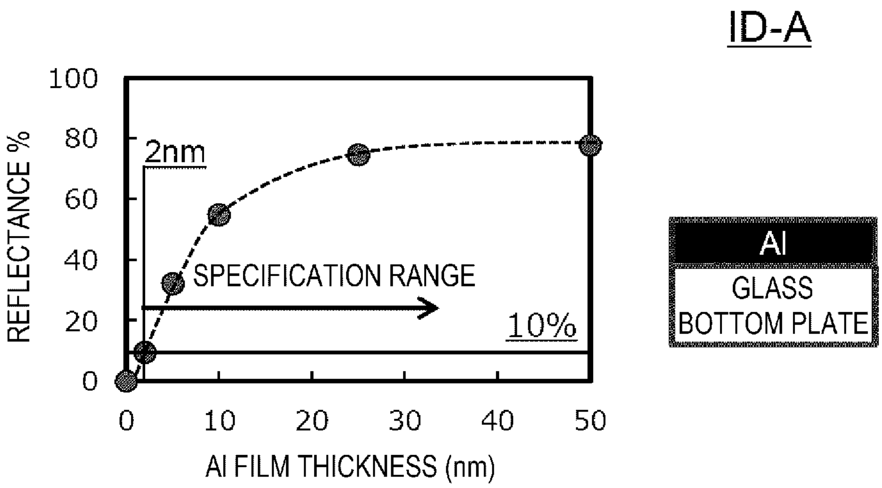
ID-A
REFLECTANCE %
100
80
60
40
20
0
2nm
SPECIFICATION RANGE
10%
0
10
20
30
40
50
Al FILM THICKNESS (nm)
Al
GLASS
BOTTOM PLATE

FIG. 19A

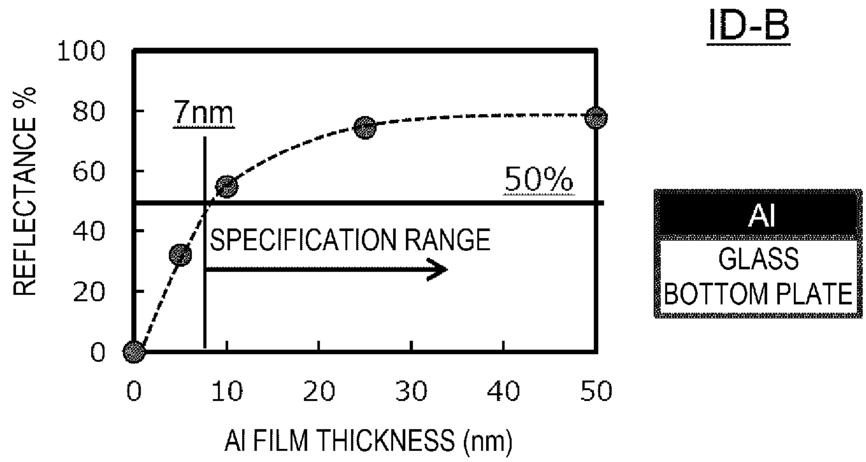


FIG. 19B

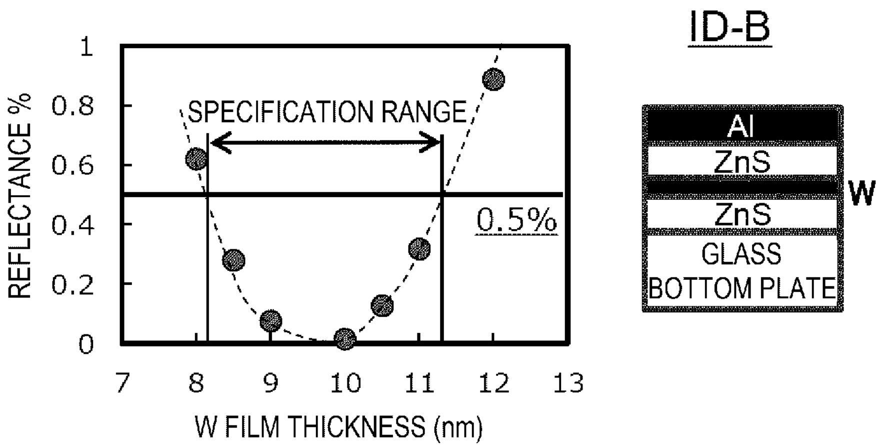


FIG. 19C

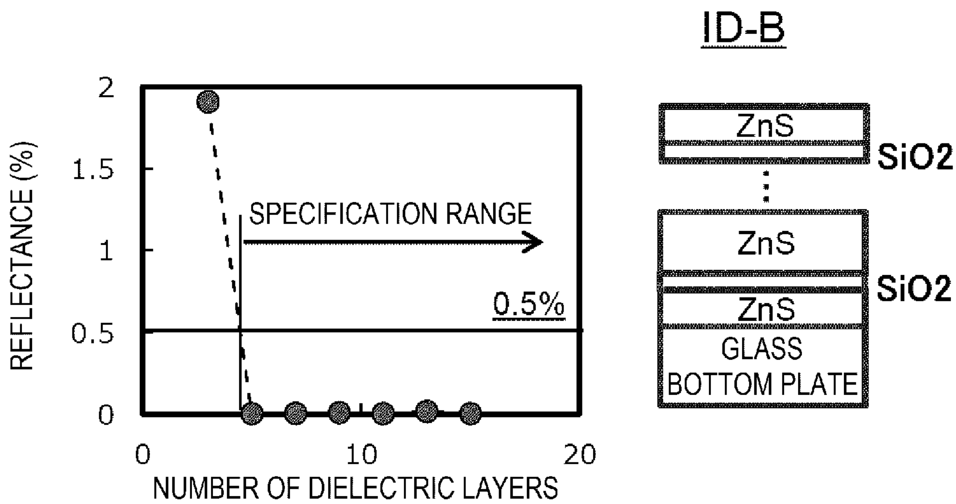

FIG. 20A

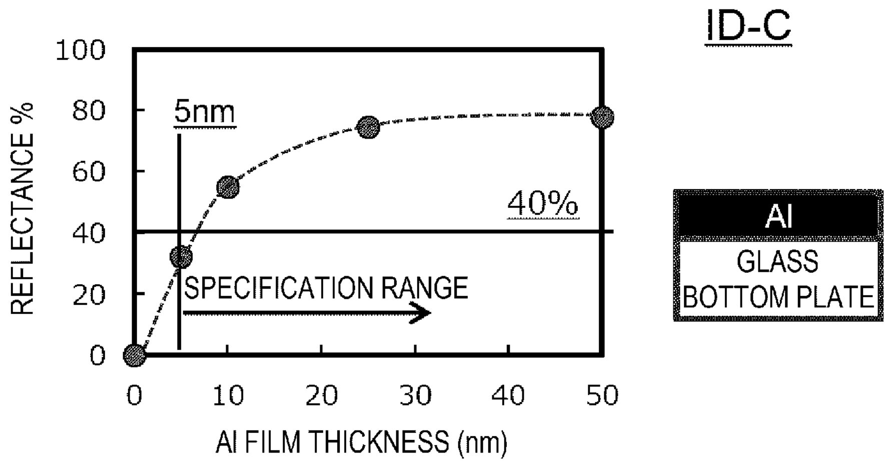


FIG. 20B

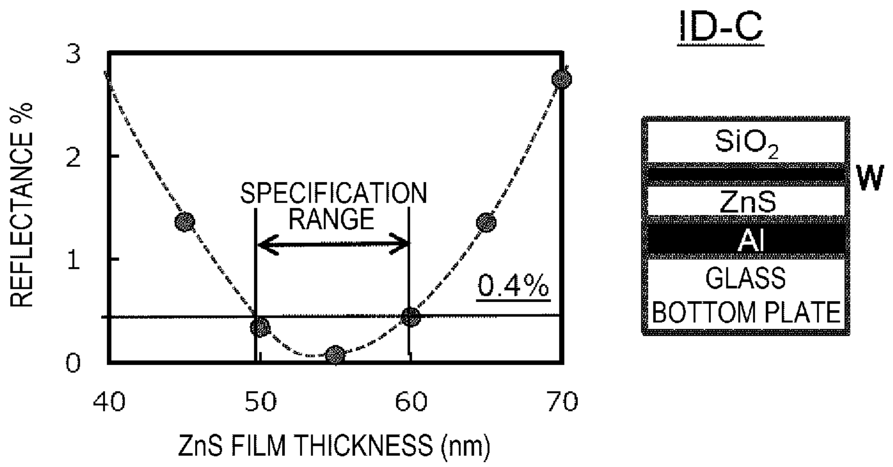


FIG. 20C

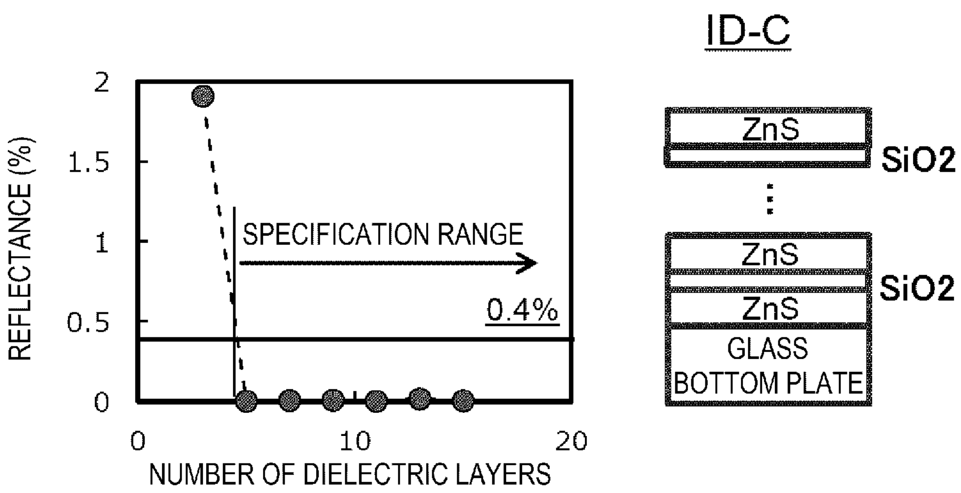

FIG. 21

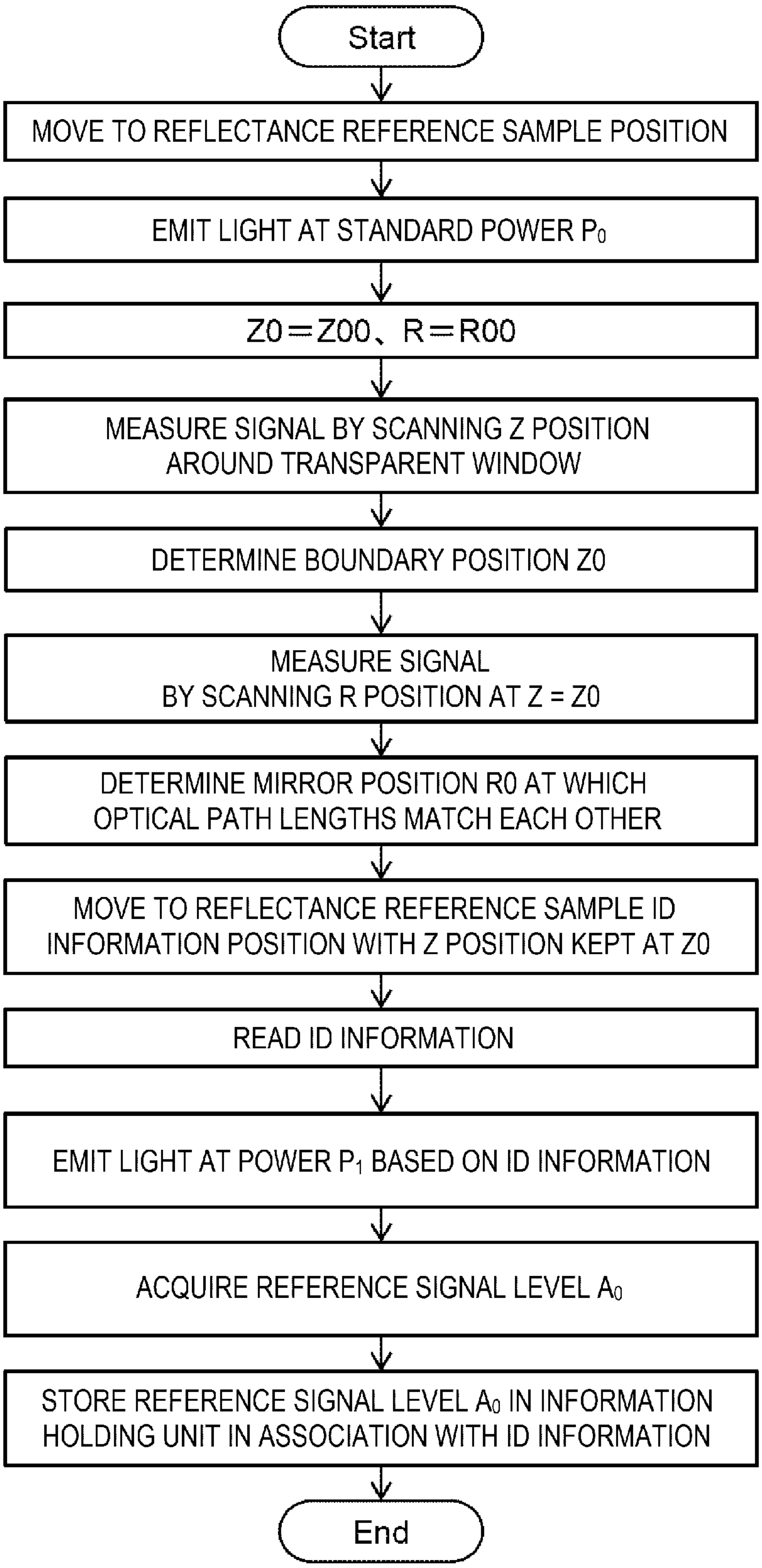
Start
MOVE TO REFLECTANCE REFERENCE SAMPLE POSITION
EMIT LIGHT AT STANDARD POWER $P_0$
Z0＝Z00、R＝R00
MEASURE SIGNAL BY SCANNING Z POSITION AROUND TRANSPARENT WINDOW
DETERMINE BOUNDARY POSITION Z0
MEASURE SIGNAL BY SCANNING R POSITION AT Z = Z0
DETERMINE MIRROR POSITION R0 AT WHICH OPTICAL PATH LENGTHS MATCH EACH OTHER
MOVE TO REFLECTANCE REFERENCE SAMPLE ID INFORMATION POSITION WITH Z POSITION KEPT AT Z0
READ ID INFORMATION
EMIT LIGHT AT POWER $P_1$ BASED ON ID INFORMATION
ACQUIRE REFERENCE SIGNAL LEVEL $A_0$
STORE REFERENCE SIGNAL LEVEL $A_0$ IN INFORMATION HOLDING UNIT IN ASSOCIATION WITH ID INFORMATION
End

FIG. 22

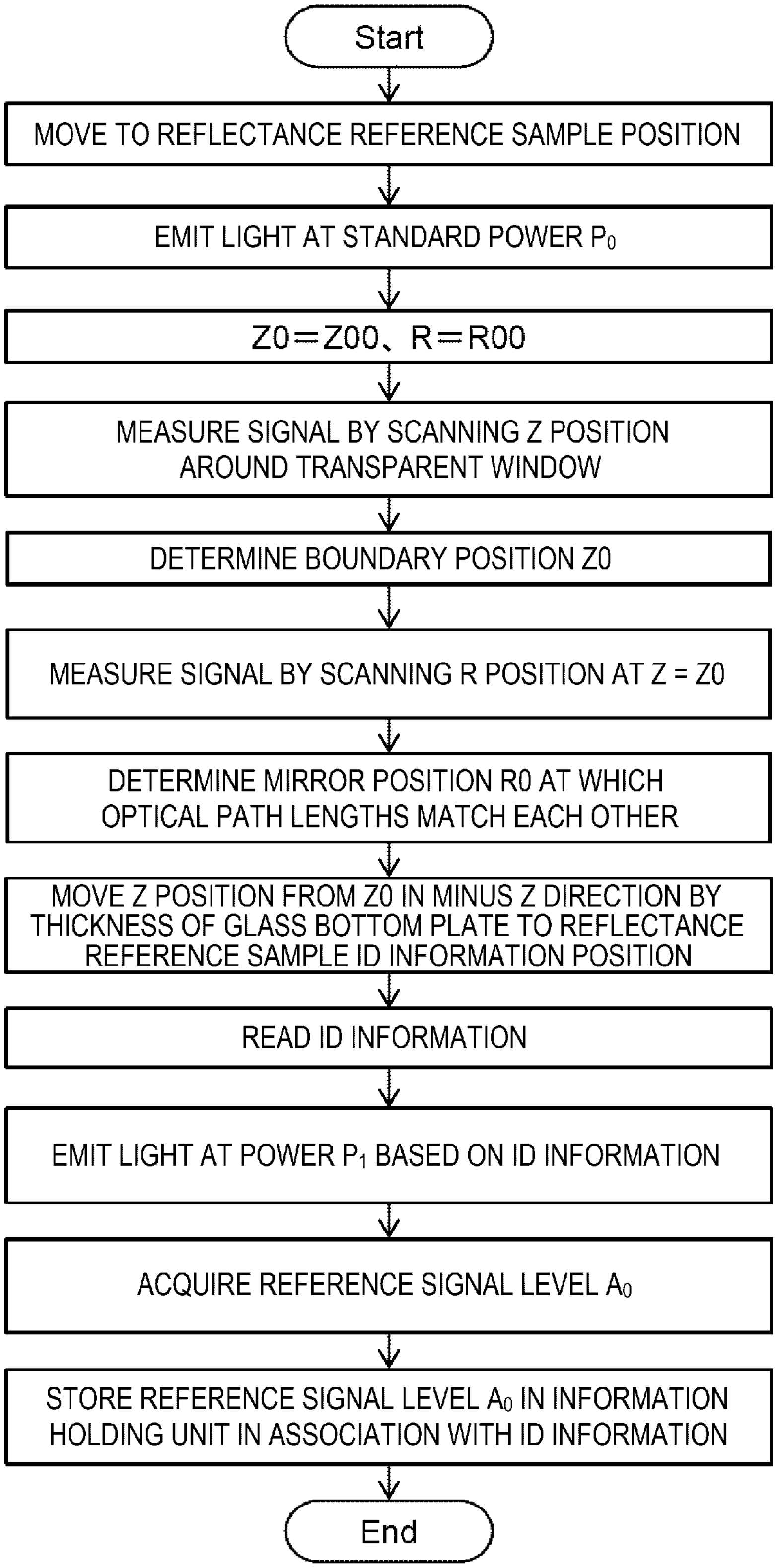
Start
MOVE TO REFLECTANCE REFERENCE SAMPLE POSITION
EMIT LIGHT AT STANDARD POWER $P_0$
Z0＝Z00、R＝R00
MEASURE SIGNAL BY SCANNING Z POSITION AROUND TRANSPARENT WINDOW
DETERMINE BOUNDARY POSITION Z0
MEASURE SIGNAL BY SCANNING R POSITION AT Z = Z0
DETERMINE MIRROR POSITION R0 AT WHICH OPTICAL PATH LENGTHS MATCH EACH OTHER
MOVE Z POSITION FROM Z0 IN MINUS Z DIRECTION BY THICKNESS OF GLASS BOTTOM PLATE TO REFLECTANCE REFERENCE SAMPLE ID INFORMATION POSITION
READ ID INFORMATION
EMIT LIGHT AT POWER $P_1$ BASED ON ID INFORMATION
ACQUIRE REFERENCE SIGNAL LEVEL $A_0$
STORE REFERENCE SIGNAL LEVEL $A_0$ IN INFORMATION HOLDING UNIT IN ASSOCIATION WITH ID INFORMATION
End

# FIG. 23

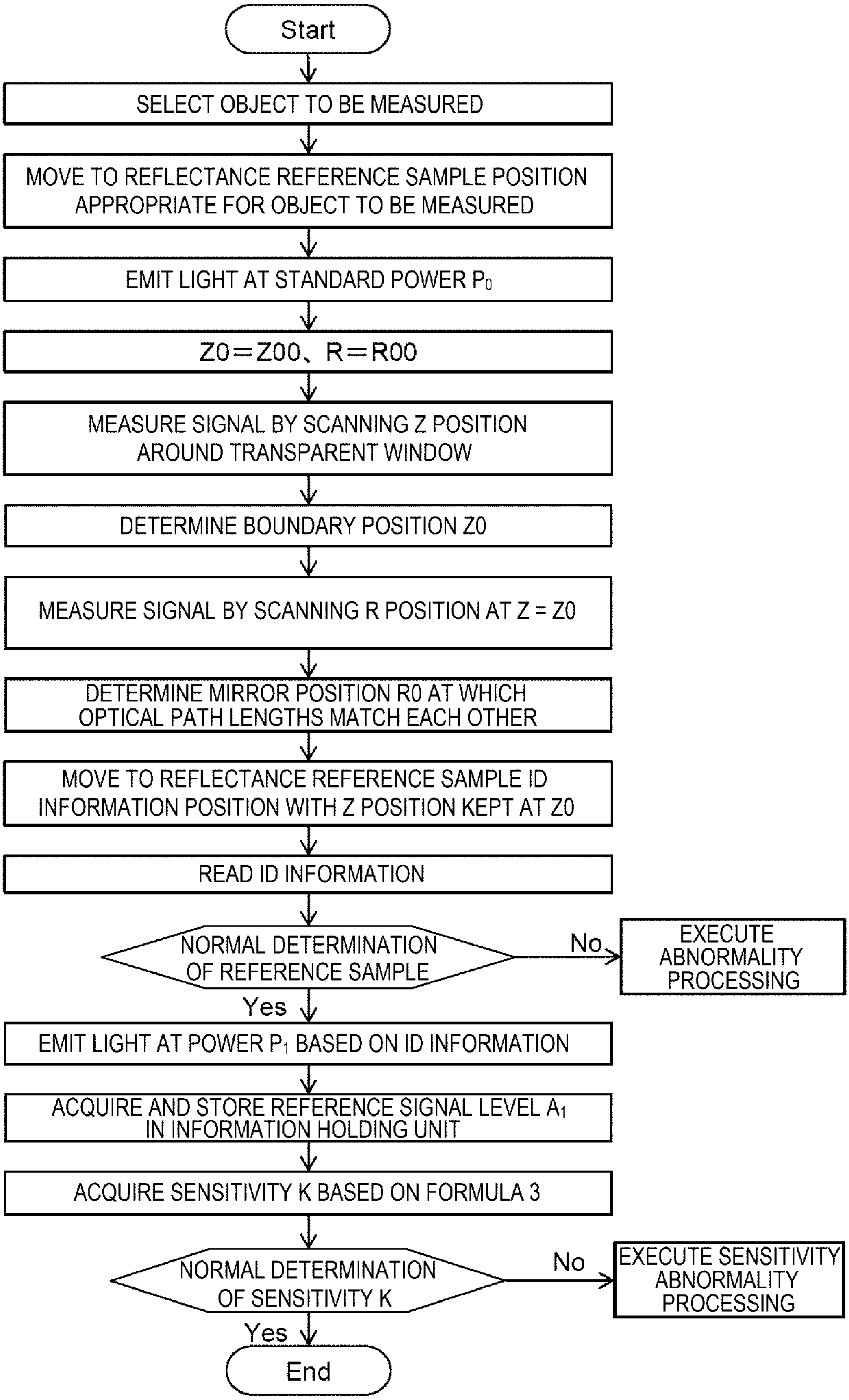
Start
SELECT OBJECT TO BE MEASURED
MOVE TO REFLECTANCE REFERENCE SAMPLE POSITION APPROPRIATE FOR OBJECT TO BE MEASURED
EMIT LIGHT AT STANDARD POWER P0
Z0=Z00、R=R00
MEASURE SIGNAL BY SCANNING Z POSITION AROUND TRANSPARENT WINDOW
DETERMINE BOUNDARY POSITION Z0
MEASURE SIGNAL BY SCANNING R POSITION AT Z = Z0
DETERMINE MIRROR POSITION R0 AT WHICH OPTICAL PATH LENGTHS MATCH EACH OTHER
MOVE TO REFLECTANCE REFERENCE SAMPLE ID INFORMATION POSITION WITH Z POSITION KEPT AT Z0
READ ID INFORMATION
NORMAL DETERMINATION OF REFERENCE SAMPLE
No
EXECUTE ABNORMALITY PROCESSING
Yes
EMIT LIGHT AT POWER P1 BASED ON ID INFORMATION
ACQUIRE AND STORE REFERENCE SIGNAL LEVEL A1 IN INFORMATION HOLDING UNIT
ACQUIRE SENSITIVITY K BASED ON FORMULA 3
NORMAL DETERMINATION OF SENSITIVITY K
No
EXECUTE SENSITIVITY ABNORMALITY PROCESSING
Yes
End

FIG. 24

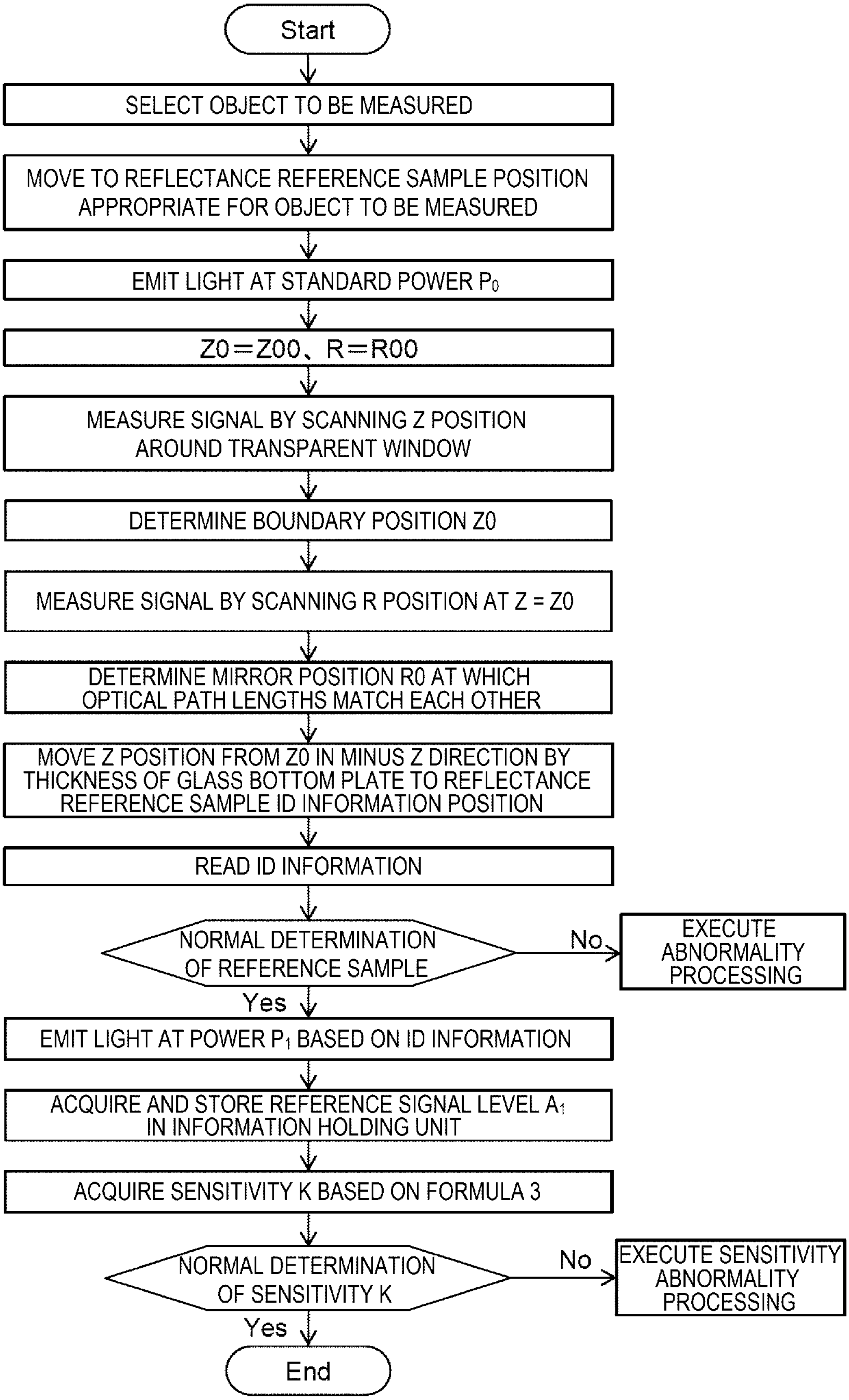
Start
SELECT OBJECT TO BE MEASURED
MOVE TO REFLECTANCE REFERENCE SAMPLE POSITION APPROPRIATE FOR OBJECT TO BE MEASURED
EMIT LIGHT AT STANDARD POWER $P_0$
Z0=Z00、R=R00
MEASURE SIGNAL BY SCANNING Z POSITION AROUND TRANSPARENT WINDOW
DETERMINE BOUNDARY POSITION Z0
MEASURE SIGNAL BY SCANNING R POSITION AT Z = Z0
DETERMINE MIRROR POSITION R0 AT WHICH OPTICAL PATH LENGTHS MATCH EACH OTHER
MOVE Z POSITION FROM Z0 IN MINUS Z DIRECTION BY THICKNESS OF GLASS BOTTOM PLATE TO REFLECTANCE REFERENCE SAMPLE ID INFORMATION POSITION
READ ID INFORMATION
NORMAL DETERMINATION OF REFERENCE SAMPLE
No
EXECUTE ABNORMALITY PROCESSING
Yes
EMIT LIGHT AT POWER $P_1$ BASED ON ID INFORMATION
ACQUIRE AND STORE REFERENCE SIGNAL LEVEL $A_1$ IN INFORMATION HOLDING UNIT
ACQUIRE SENSITIVITY K BASED ON FORMULA 3
NORMAL DETERMINATION OF SENSITIVITY K
No
EXECUTE SENSITIVITY ABNORMALITY PROCESSING
Yes
End

FIG. 25

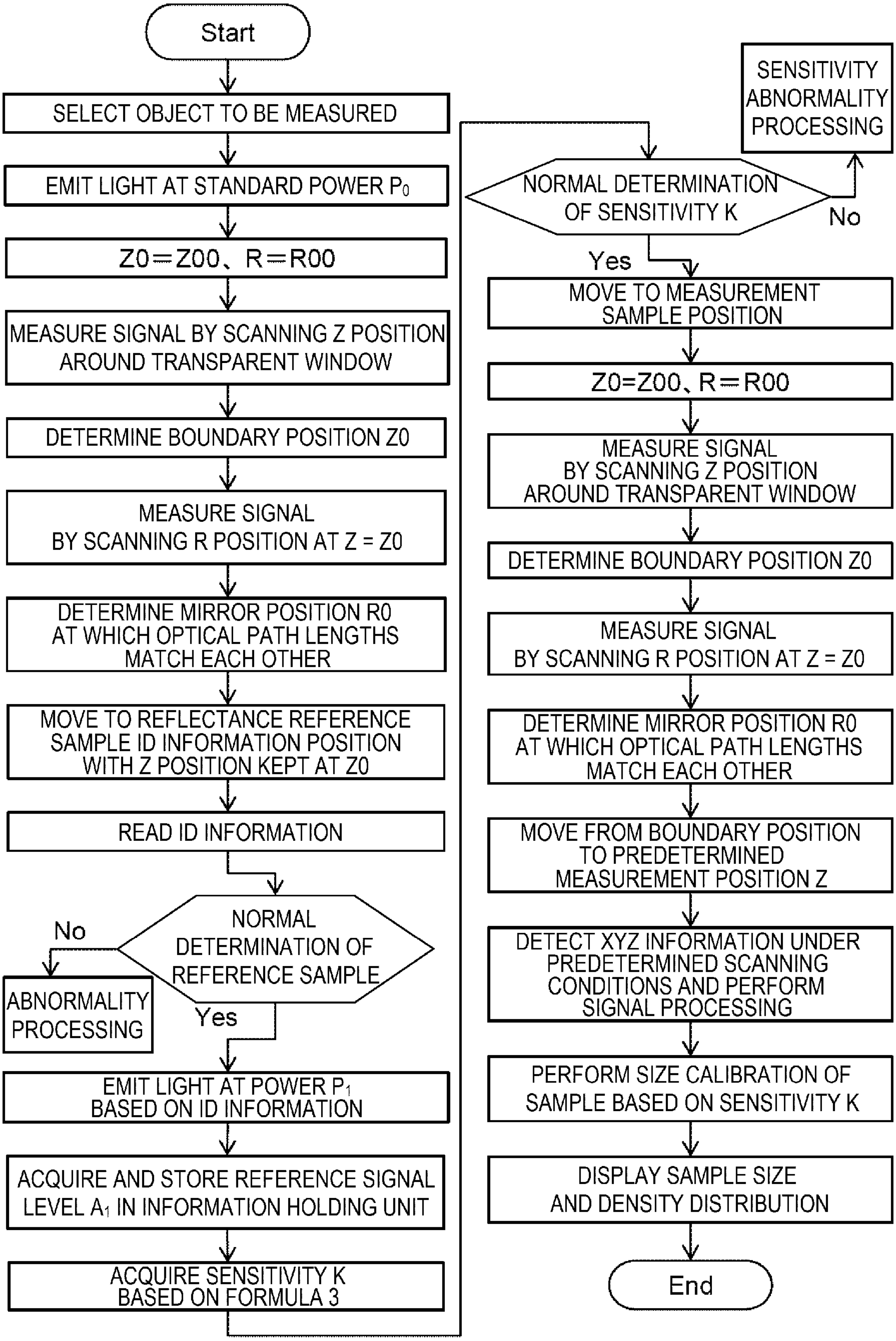
Start
SELECT OBJECT TO BE MEASURED
EMIT LIGHT AT STANDARD POWER P0
Z0=Z00、R=R00
MEASURE SIGNAL BY SCANNING Z POSITION AROUND TRANSPARENT WINDOW
DETERMINE BOUNDARY POSITION Z0
MEASURE SIGNAL BY SCANNING R POSITION AT Z = Z0
DETERMINE MIRROR POSITION R0 AT WHICH OPTICAL PATH LENGTHS MATCH EACH OTHER
MOVE TO REFLECTANCE REFERENCE SAMPLE ID INFORMATION POSITION WITH Z POSITION KEPT AT Z0
READ ID INFORMATION
NORMAL DETERMINATION OF REFERENCE SAMPLE
No
ABNORMALITY PROCESSING
Yes
EMIT LIGHT AT POWER P1 BASED ON ID INFORMATION
ACQUIRE AND STORE REFERENCE SIGNAL LEVEL A1 IN INFORMATION HOLDING UNIT
ACQUIRE SENSITIVITY K BASED ON FORMULA 3
NORMAL DETERMINATION OF SENSITIVITY K
No
SENSITIVITY ABNORMALITY PROCESSING
Yes
MOVE TO MEASUREMENT SAMPLE POSITION
Z0=Z00、R=R00
MEASURE SIGNAL BY SCANNING Z POSITION AROUND TRANSPARENT WINDOW
DETERMINE BOUNDARY POSITION Z0
MEASURE SIGNAL BY SCANNING R POSITION AT Z = Z0
DETERMINE MIRROR POSITION R0 AT WHICH OPTICAL PATH LENGTHS MATCH EACH OTHER
MOVE FROM BOUNDARY POSITION TO PREDETERMINED MEASUREMENT POSITION Z
DETECT XYZ INFORMATION UNDER PREDETERMINED SCANNING CONDITIONS AND PERFORM SIGNAL PROCESSING
PERFORM SIZE CALIBRATION OF SAMPLE BASED ON SENSITIVITY K
DISPLAY SAMPLE SIZE AND DENSITY DISTRIBUTION
End

FIG. 26

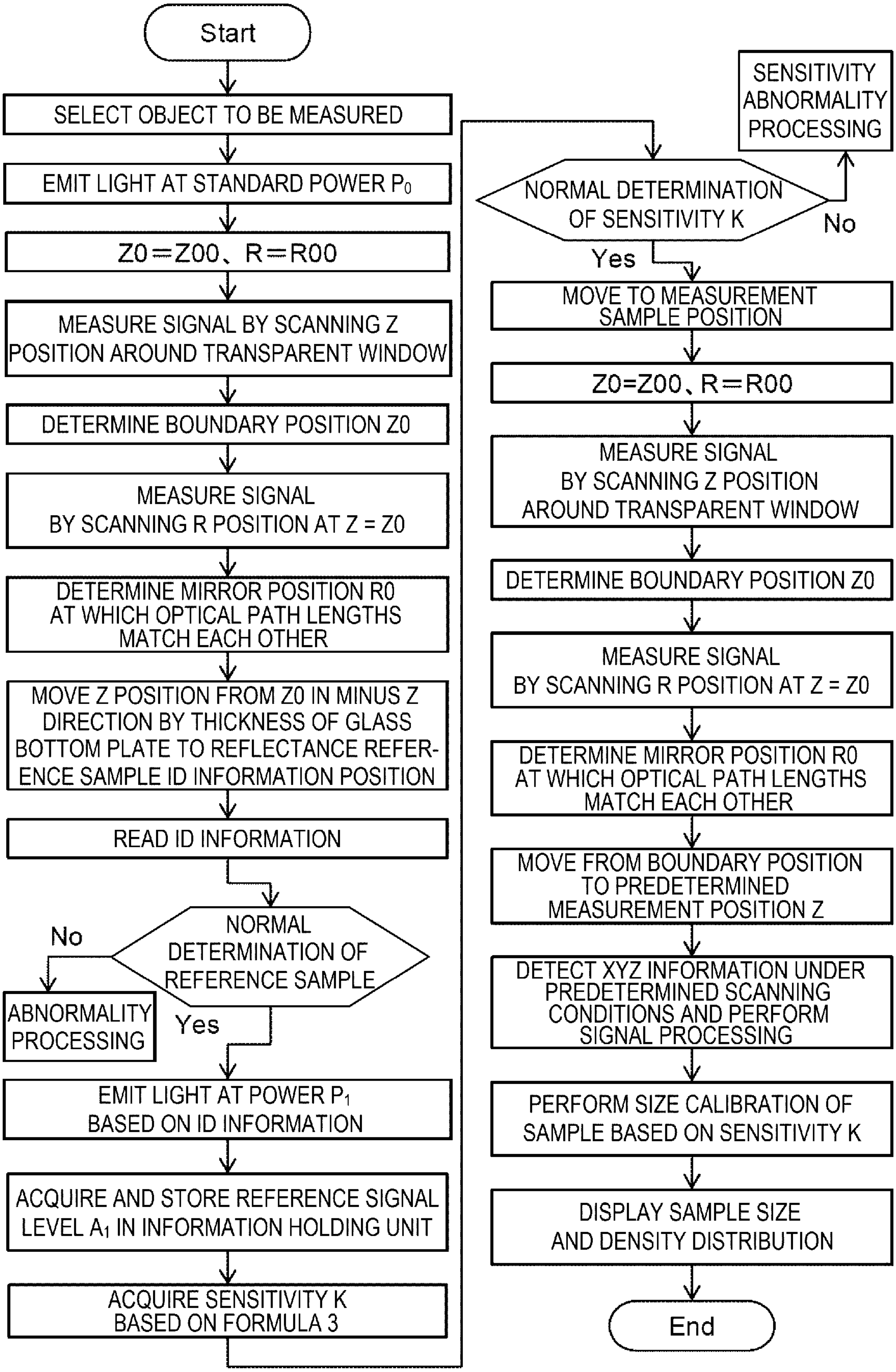
Start
SELECT OBJECT TO BE MEASURED
EMIT LIGHT AT STANDARD POWER P0
Z0=Z00、R=R00
MEASURE SIGNAL BY SCANNING Z POSITION AROUND TRANSPARENT WINDOW
DETERMINE BOUNDARY POSITION Z0
MEASURE SIGNAL BY SCANNING R POSITION AT Z = Z0
DETERMINE MIRROR POSITION R0 AT WHICH OPTICAL PATH LENGTHS MATCH EACH OTHER
MOVE Z POSITION FROM Z0 IN MINUS Z DIRECTION BY THICKNESS OF GLASS BOTTOM PLATE TO REFLECTANCE REFERENCE SAMPLE ID INFORMATION POSITION
READ ID INFORMATION
NORMAL DETERMINATION OF REFERENCE SAMPLE
No
ABNORMALITY PROCESSING
Yes
EMIT LIGHT AT POWER P1 BASED ON ID INFORMATION
ACQUIRE AND STORE REFERENCE SIGNAL LEVEL A1 IN INFORMATION HOLDING UNIT
ACQUIRE SENSITIVITY K BASED ON FORMULA 3
NORMAL DETERMINATION OF SENSITIVITY K
No
SENSITIVITY ABNORMALITY PROCESSING
Yes
MOVE TO MEASUREMENT SAMPLE POSITION
Z0=Z00、R=R00
MEASURE SIGNAL BY SCANNING Z POSITION AROUND TRANSPARENT WINDOW
DETERMINE BOUNDARY POSITION Z0
MEASURE SIGNAL BY SCANNING R POSITION AT Z = Z0
DETERMINE MIRROR POSITION R0 AT WHICH OPTICAL PATH LENGTHS MATCH EACH OTHER
MOVE FROM BOUNDARY POSITION TO PREDETERMINED MEASUREMENT POSITION Z
DETECT XYZ INFORMATION UNDER PREDETERMINED SCANNING CONDITIONS AND PERFORM SIGNAL PROCESSING
PERFORM SIZE CALIBRATION OF SAMPLE BASED ON SENSITIVITY K
DISPLAY SAMPLE SIZE AND DENSITY DISTRIBUTION
End

FIG. 27A

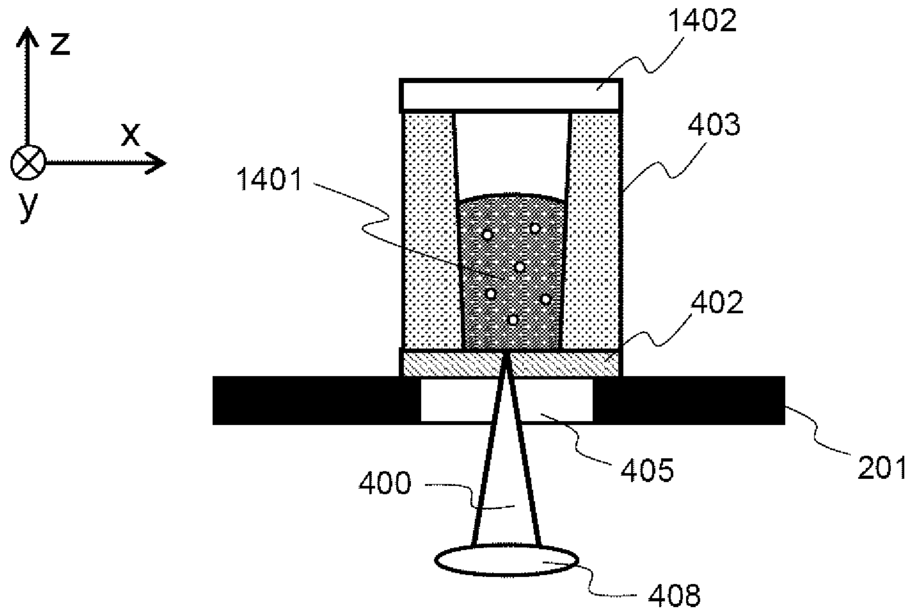


FIG. 27B

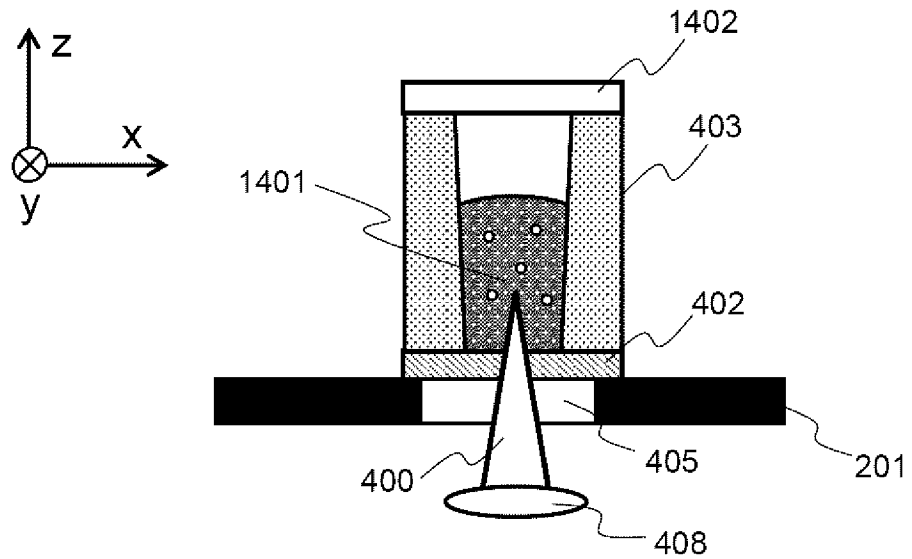

FIG. 28A

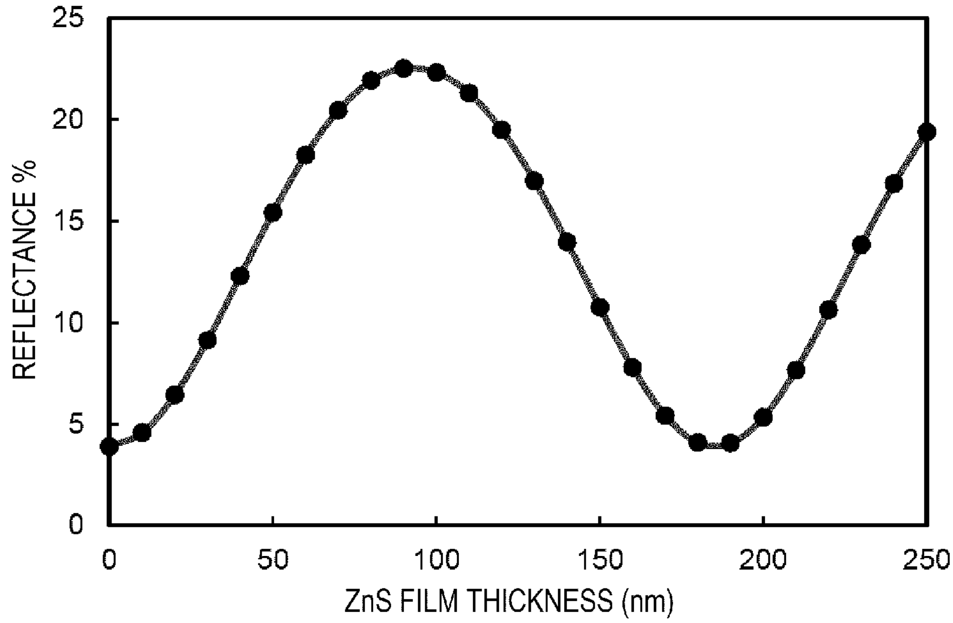


FIG. 28B

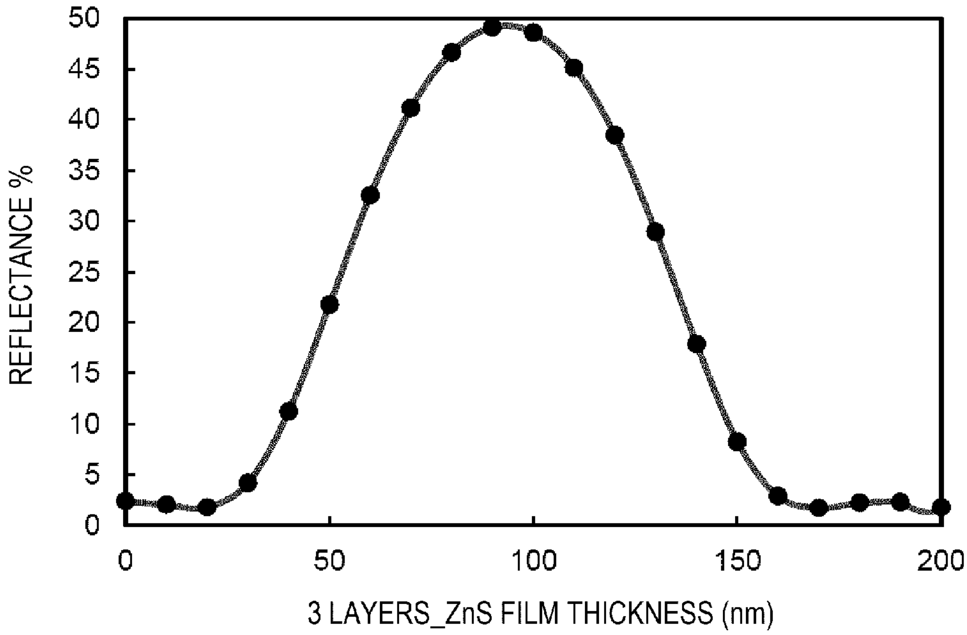

FIG. 29

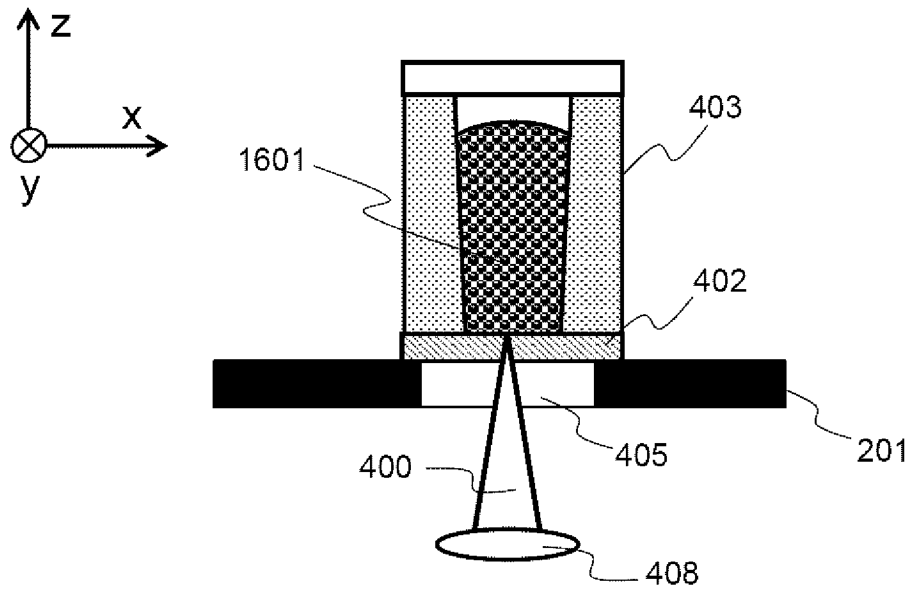

## INTERNATIONAL SEARCH REPORT

International application No. **PCT/JP2024/017863**

**A. CLASSIFICATION OF SUBJECT MATTER**

***G01N 15/00***(2024.01)i; ***G01N 15/0227***(2024.01)i
FI: G01N15/00 C; G01N15/0227 110

According to International Patent Classification (IPC) or to both national classification and IPC

**B. FIELDS SEARCHED**

Minimum documentation searched (classification system followed by classification symbols)

G01N15/00; G01N15/0227

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-300182 A (NIPPON SOKEN, INC.) 24 December 2009 (2009-12-24) entire text, all drawings | 1-15 |
| A | JP 2001-165846 A (NIKKISO CO., LTD.) 22 June 2001 (2001-06-22) entire text, all drawings | 1-15 |
| A | JP 2016-217810 A (SHARP KABUSHIKI KAISHA) 22 December 2016 (2016-12-22) entire text, all drawings | 1-15 |
| A | JP 11-83724 A (BAYER CORP.) 26 March 1999 (1999-03-26) entire text, all drawings | 1-15 |
| A | JP 2004-500669 A (QUANTUM DOT CORPORATION) 08 January 2004 (2004-01-08) entire text, all drawings | 1-15 |
| A | US 2022/0099545 A1 (TOKYO ELECTRON LIMITED) 31 March 2022 (2022-03-31) entire text, all drawings | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 June 2024** | **09 July 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2024/017863**

| Patent document cited in search report | Publication date (day/month/year) | Patent family member(s) | Publication date (day/month/year) |
|---|---|---|---|
| JP 2009-300182 A | 24 December 2009 | (Family: none) | |
| JP 2001-165846 A | 22 June 2001 | (Family: none) | |
| JP 2016-217810 A | 22 December 2016 | (Family: none) | |
| JP 11-83724 A | 26 March 1999 | US 6521729 B1<br>entire text, all drawings<br>EP 887637 A2 | |
| JP 2004-500669 A | 08 January 2004 | US 2002/0008148 A1<br>entire text, all drawings<br>EP 2267451 A2<br>CA 2405267 A | |
| US 2022/0099545 A1 | 31 March 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017102032 A
- WO 2020144754 A